# EUROPEAN PATENT SPECIFICATION

(11) **EP 3 069 477 B1**
(45) Date of publication and mention of the grant of the patent: **25.12.2019**
(21) Application number: 13897447.2
(22) Date of filing: 12.11.2013
(51) Int. Cl.: H04L 12/26, H04W 24/10, H04W 24/02, H04W 24/08

(54) **SUPERVISION OF DATA IN A WIRELESS NETWORK**
ÜBERWACHUNG VON DATEN IN EINEM DRAHTLOSEN NETZWERK
SUPERVISION DE DONNÉES DANS UN RÉSEAU SANS FIL

(43) Date of publication of application: 21.09.2016
(73) Proprietor: Vasona Networks, Inc., San Jose, CA 95110 (US)
(72) Inventor: BEN-NUN, Michael, 4720366 Ramat-Hasharon (IL); WEILL, Ofer, 7175878 Modiin (IL); BAR YANAI, Roni, 4051206 Even-Yehuda (IL)
(74) Representative: Gill, David Alan
(86) International application number: PCT/IL2013/050929
(87) International publication number: WO 2015/071891

(56) References cited:
- EP-A2- 1 876 779
- EP-A2- 2 661 030
- WO-A1-2013/077786
- US-A1- 2003 067 903
- US-A1- 2004 058 652
- US-A1- 2006 146 749
- US-A1- 2010 039 938
- US-A1- 2010 188 975

## Description

### TECHNICAL FIELD

The disclosure relates to wireless networks.

### BACKGROUND

A wireless network may be used to provide wireless data services to a user (also referred to as a subscriber). Data may be transferred between a packet data network (PDN) and a user equipment (UE) associated with a user via a base station. Each base station may service one or more groups served by one or more wireless transmitters. At any point in time, each group may include zero or any number of UEs. For example, at a particular point in time a certain base station may service 1 group, 3 groups or 6 groups, with each group including zero or any number of UEs (e.g. tens of UEs).

Examples of a wireless network may include a mobile network, a Wi-Fi network, and/or any other type of wireless network. In a mobile network with a core network of Universal Mobile Telecommunications System (UMTS) architecture, a base station may additionally or alternatively be referred to as a NodeB. In a mobile network with a core network of Long Term Evolution architecture (LTE) a base station may additionally or alternatively be referred to as an eNodeB. In a mobile network with a core network of Global System for Mobile Communications (GSM), Code Division Multiple Access (CDMA), or Code Division Multiple Access 2000 (CDMA 2000), a base station may additionally or alternatively be referred to as a base transceiver station or radio base station. In a Wi-Fi network, a base station may additionally or alternatively be referred to as an access point or wireless access point. US patent publication 2003/0067903 relates to IP-flow classification of packets according to their designated quality of service handling, in a wireless network. US patent publication 2010/0188975 relates to a communication device which implements a service policy for assisting control of the communications device use of a service on a network. US patent publication 2010/0039938 discloses the handling of congestion and delay in a data packet network, and related queue management.

### SUMMARY

The present invention is disclosed in combination to the independent claims. Additional advantageous embodiments are disclosed by the appended dependent claims. The other "embodiments" or "aspects" disclosed herein have only illustrative purpose and are not intended to extend the scope of protection which is solely defined by the claims. According to a first aspect of the present invention, there is provided a method of supervising data in a wireless network, comprising: intercepting packets en route between a base station and a packet data network, by a supervisor computer; noting times associated with the intercepted data packets at the supervisor computer; identifying in the intercepted packets, one or more characteristics of the packet; at least partly based on one or more of said noted times and the identified one or more characteristics, evaluating the service provided by the base station; at least partly based on a result of said evaluating, determining whether or not at least one action to improve a quality of user experience provided by the base station should be performed; and if determined that any action should be performed, performing at least one action to improve a quality of user experience provided by the base station, characterized in that: evaluating the service provided by the base station comprises: approximating an incoming data rate to the base station for packets directed to a plurality of user equipments UEs, based on the noted times associated with the intercepted data packets; estimating an outgoing data rate from the base station to the plurality of UEs, based on the intercepted packets; estimating for each of the UEs, at least one parameter indicative of a fullness of at least one queue in the base station for packets directed to the UE, based on the estimated incoming data rates and the outgoing data rates; and comparing the estimated at least one parameter indicative of the fullness to one or more thresholds.

In accordance with the presently disclosed subject matter, there is provided a method of supervising data in a wireless network, comprising: noting times associated with data packets en route between a packet data network and a base station; at least partly based on one or more of the noted times, evaluating the service provided by the base station; at least partly based on a result of the evaluating, determining whether or not at least one action should be performed; and if determined that any action should be performed, performing at least one action.

In some examples of the method, the evaluating includes: estimating at least one parameter at least partly based on one or more of the noted times. In some cases of these examples, at least one of the at least one parameter is indicative of base station queuing time.

In some cases of these examples, at least one of the at least one parameter is a round trip time or adjusted round trip time.

In some cases of these examples, at least one of the at least one parameter is a base station outgoing rate.

In some examples of the method, at least one of the at least one action is performed in order to reduce the fullness of at least one queue in the base station.

According to a second aspect of the present invention, there is provided a system for supervising data in a wireless network, comprising: a noter configured to intercept data packets en route between a packet data network and a base station, to note times associated with the intercepted data packets and to identify in the intercepted packets, one or more characteristics of a corresponding stream of the packet; an evaluator configured, at least partly based on one or more of said noted times and the identified one or more characteristics, to evaluate the service provided by the base station, and configured, at least partly based on a result of said evaluating, to determine whether or not at least one action to improve a quality of user experience provided by the base station should be performed; and an action performer delayer configured, if determined that any action should be performed, to perform at least one action to improve a quality of user experience provided by the base station, characterized in that: the evaluator is configured to evaluate the service provided by the base station by estimating an incoming data rate to the base station for packets directed to a plurality of user equipments UEs, based on the intercepted packets, estimating an outgoing data rate from the base station to the plurality of UEs , based on the intercepted packets, estimating for each of the UEs, at least one parameter indicative of a fullness of at least one queue in the base station for packets directed to the UE, based on the estimated incoming data rates and the outgoing data rates; and comparing the estimated at least one parameter indicative of the fullness to one or more thresholds.

In accordance with the presently disclosed subject matter, there is provided a system for supervising data in a wireless network, comprising: a noter configured to note times associated with data packets en route between a packet data network and a base station; an evaluator configured, at least partly based on one or more of the noted times, to evaluate the service provided by the base station, and configured, at least partly based on a result of the evaluating, to determine whether or not at least one action should be performed; and an action performer delayer configured, if determined that any action should be performed, to perform at least one action.

In some examples, the system further comprises: a data structure in which the noter is configured to store times associated with data packets.

In some examples, the system further comprises: a recognizer configured to recognize characteristics of data packets.

In some examples, the system further comprises: a handler configured to intercept and forward data packets.

In some examples of the system, at least part of the system is located in the wireless network between a packet data network and one or more base stations.

In some examples of the system, at least one of the at least one action is performed in order to reduce the fullness of at least one queue in the base station.

According to a third aspect of the present invention, there is provided a computer program product comprising a computer useable medium having computer readable code embodied therein for supervising data in a wireless network, the computer program product comprising: computer readable program code for causing a computer to intercept data packets en route between a packet data network and a base station to note times associated with the intercepted data packets and to identify in the intercepted packets, one or more characteristics of a corresponding stream of the packet; computer readable program code for causing a computer, at least partly based on one or more of the noted times and the identified one or more characteristics, to evaluate the service provided by the base station; computer readable program code for causing a computer, at least partly based on a result of the evaluating, to determine whether or not at least one action to improve a quality of user experience provided by the base station should be performed; and computer readable program code for causing a computer, if determined that any action should be performed, to perform at least one action to improve a quality of user experience provided by the base station, characterized in that: the evaluating comprises estimating an incoming data rate to the base station for packets directed to a plurality of user equipments UEs, based on the intercepted packets, estimating an outgoing data rate from the base station to the plurality of UEs, based on the intercepted packets, estimating for each of the UEs, at least one parameter indicative of a fullness of at least one queue in the base station for packets directed to the UE, based on the estimated incoming data rates and the outgoing data rates; and comparing the estimated at least one parameter indicative of the fullness to one or more thresholds.

In some examples of the computer program product, at least one of the at least one action is performed in order to reduce the fullness of at least one queue in the base station.

### BRIEF DESCRIPTION OF THE DRAWINGS

In order to understand the subject matter and to see how it may be carried out in practice, some examples will be described, with reference to the accompanying drawings, in which:
**Fig. 1** is a block diagram of an example of a wireless network, in accordance with the presently disclosed subject matter;
**Fig. 2** is a block diagram of an example of a supervisor system, in accordance with the presently disclosed subject matter;
**Fig. 3** is a flowchart of an example of a supervision method, in accordance with the presently disclosed subject matter;
**Fig. 4** is a block diagram of an example of an observer system, in accordance with the presently disclosed subject matter;
**Fig. 5** is a flowchart of an example of an observation method, in accordance with the presently disclosed subject matter;
**Fig. 6** is a block diagram of an example of an affector system, in accordance with the presently disclosed subject matter;
**Fig. 7** is a flowchart of an example of an affecting method, in accordance with the presently disclosed subject matter;
**Fig. 8** is a block diagram of an example of a mobile network with a core network of UMTS/GSM architecture, in accordance with the presently disclosed subject matter; and
**Fig. 9** is a block diagram of an example of a mobile network with a core network of LTE architecture, in accordance with the presently disclosed subject matter.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate identical or analogous elements.

### DETAILED DESCRIPTION OF THE DRAWINGS

Examples of methods, systems, and computer program products relating to supervising data in a wireless network are disclosed. At least part of a system may be located between a packet data network and a base station, and/or may be at least logically separate from the base station. The system may be capable of evaluating the service provided by the base station, and may be capable of determining whether or not any action should consequently be performed. Examples of an action may include an action which may not necessarily affect en-route data packets such as outputting a report, and/or an action which may affect en-route data packets such as delaying packets, not delaying packets, and/or stopping the delaying of packets. An action which affects data packets may or may not affect data packets uniformly. An action may or may not result in an improvement in quality of user experience.

In the description herein, numerous specific details are set forth in order to provide a thorough understanding of the subject matter. However, it will be understood by those skilled in the art that some examples of the subject matter may be practiced without these specific details. In other instances, well-known features, structures, characteristics, stages, methods, modules, elements, entities or systems have not been described in detail so as not to obscure the subject matter.

Usage of the term "typically although not necessarily", "although not necessarily so" "such as", "e.g.", "possibly", "it is possible", "it may be possible", "optionally", "say", "for example," "for instance", "an example" "one example", "illustrated example", "some examples", "another example", "other examples, "various examples", "examples", "instances", "one instance", "some instances", "another instance", "other instances", "one case", "some cases", "another case", "other cases", "cases", or variants thereof means that a particular described feature, structure, characteristic, stage, method, module, element, entity, or system is included in at least one example of the subject matter, but not necessarily in all examples. The appearance of the same term does not necessarily refer to the same example(s).

The term " illustrated example", is used to direct the attention of the reader to one or more of the figures, but should not be construed as necessarily favoring any example over any other.

Usage of conditional language, such as "may", "can", "could", or variants thereof should be construed as conveying that one or more examples of the subject matter may include, while one or more other examples of the subject matter may not necessarily include, certain features, structures, stages, methods, modules, elements, entities or systems. Thus such conditional language is not generally intended to imply that a particular described feature, structure, stage, method, module, element, entity or system is necessarily included in all examples of the subject matter.

The term "non-transitory" is used to exclude transitory, propagating signals, but to otherwise include any volatile or non-volatile computer memory technology suitable to the application.

It should be appreciated that certain features, structures, characteristics, stages, methods, modules, elements, entities or systems disclosed herein, which are, for clarity, described in the context of separate examples, may also be provided in combination in a single example. Conversely, various features, structures, characteristics, stages, methods, modules, elements, entities or systems disclosed herein, which are, for brevity, described in the context of a single example, may also be provided separately or in any suitable sub-combination.

Usage of terms such as "observing", "estimating", "comparing", "determining", "outputting", "reporting", "evaluating", "noting", "performing", "recognizing", "handling", "dropping", "updating", "adjusting", "delaying", "stopping", "checking", "waiting", "causing", "removing", "placing", "storing", "intercepting", "forwarding", "executing", implementing", or the like, may refer to the action(s) and/or process(es) of a system such as any of the system(s) described below, or a part thereof.

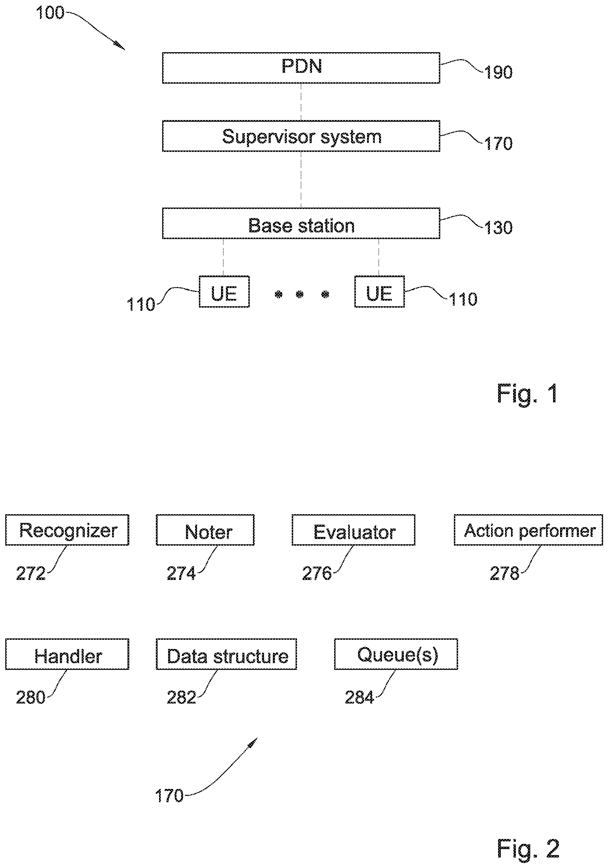

Referring now to the figures in more detail, **Fig. 1** is a block diagram of an example of a wireless network **100,** in accordance with the presently disclosed subject matter.

In the illustrated example, wireless network **100** may include one or more packet data network(s) (PDN) **190,** one or more base station(s) **120,** one or more supervisor system(s) **170** and one or more user equipment(s) (UE) **130.** The dashed lines between elements **190, 170, 130** and **110,** signify that there may be intervening element(s) between elements illustrated in **Fig. 1****,** but for simplicity's sake, such intervening element(s) may not be described with reference to **Fig. 1****.** Each base station **130** may service one or more groups served by one or more wireless transmitters and therefore may service at any point in time zero or more UE(s) **110.** The subject matter does not limit the location of any supervisor **170,** but optionally at least part of each supervisor **170** may be located in a location between one or more PDN(s) **190** and one or more base station(s) **130,** and/or optionally at least part of each supervisor **170** may be in the same location as one or more base station(s) **130** but at least logically separate from base station(s) **130** . Such a location may possibly enable supervisor **170** to supervise data packets en route in one or either direction between any of PDN(s) **190** and any of base station(s) **130.**

For simplicity of illustration and description, a single element is illustrated in **Fig. 1** and described herein for each of PDN **190,** supervisor **170,** and base station **130,** but in some examples network **100** may include a plurality of elements of one or more of these types.

Wireless network **100** may be any type of wireless network, such as a mobile network, a Wi-Fi network, another type of wireless network, a combination of any of the above, etc. If at least part of wireless network **100** is a mobile network, the mobile network may include a core network of any architecture such as UMTS, GSM, LTE, CDMA, CDMA2000, any network of any appropriate generation, etc.

PDN **190** may be any type of packet data network. For instance, PDN **190** may be the Internet, and/or any other public and/or private packet data network.

Supervisor system **170** may be made up of any combination of software, hardware and/or firmware that performs the function(s) as described and explained herein, including for instance supervision of data in mobile network **100.** For example, supervisor system **170** or any part thereof may include a computer. The term computer in the single form herein should be construed to cover a single computer and/or a plurality of computers and the term computer should be broadly construed to cover any combination of hardware, software and/or firmware, the combination including at least some hardware and having capabilities which include data processing capabilities. For example, a computer may be specially constructed for the desired purposes, and/or a computer may be selectively activated and/or reconfigured by specially constructed program code.

Depending on the instance, supervisor **170** may be centralized in one location (e.g. including one or more units at that location), or supervisor **170** may be dispersed over more than one location in mobile network **100.** Therefore even in cases where at least part of supervisor **170** may be located between base station **130** and PDN **190** and/or in the same location as base station **130** but logically separate, it is possible that another part of supervisor **170** may be located elsewhere.

User equipment **110** may be any type of user equipment configured to access PDN **190** via base station **130.** An example of user equipment **110** may include a Smartphone, feature phone, a tablet, a PC ("personal computer") connecting via a USB dongle, etc.

Base station **130** may be any type of base station associated with any architecture (e.g. NodeB in UMTS, eNodeB in LTE; base transceiver station/radio base station in GSM, CDMA, or CDMA2000; access point/wireless access point in Wi-Fi, etc). For instance, base station **130** may include one or more transmitters/receiver(s), one or more antenna(s) and/or one or more other element(s).

Typically although not necessarily, data packets arriving at base station **130** from PDN **190** may be placed in one or more queue(s) in base station **130.** Typically although not necessarily, base station **130** may be configured to schedule the provision of data packets, destined for UEs **110** which "compete" for service, among these UEs **110.** The scheduling of data packets may typically although not necessarily be in accordance with a proprietary scheduling algorithm. For instance, one scheduling algorithm may aim to maximize throughput per base station **130** (or if base station **130** services more than one group served by more than one wireless transmitter, then additionally or alternatively per group). Throughput may be affected by the amount of overhead and/or retransmitted packets, where the amount of overhead and/or retransmitted packets may be dependent for instance on any of reception conditions, interference, the scheduling algorithm etc. Possibly a scheduling algorithm which favors UE(s) **110** with the best reception conditions rather than ignoring reception conditions when scheduling data packets may result in a higher throughput. Additionally or alternatively, another scheduling algorithm may be proportionally fair by aiming to maximize throughput but allowing all competing UEs **110** at least a minimal level of service. The subject matter is not bound by any particular scheduling algorithm.

**Fig. 2** is a block diagram of an example of a supervisor system **170,** in accordance with the presently disclosed subject matter.

Depending on the example, supervisor **170** may be configured to supervise data in a manner which may vary between very passive to very active.

In the illustrated example, supervisor **170** may include a noter module **274,** an evaluator module **276,** an action performer module **278,** and optionally a recognizer module **272,** a handler module **280,** a queue(s) module **284,** and/or a data structure module **282.** Any module in supervisor **170** may be made up of any combination of software, hardware and/or firmware suitable for the function(s) attributed to the module herein.

When included, recognizer **272** may, for instance, be configured to recognize one or more characteristic(s) of a data packet. The subject matter does not limit how recognizer **272** may recognize characteristic(s) of a data packet. For the purpose of illustration only, however, some examples are now presented. For example, one or more characteristic(s) may be recognized using deep packet inspection. Additionally or alternatively, for example, one or more characteristic(s) may be recognized from the header(s) of the data packet. Additionally or alternatively, for example, one or more characteristic(s) may be recognized at least partly based on previous signaling in wireless network **100.**

Noter **274** may, for instance, be configured to note a time associated with a data packet en route from PDN **190** to base station **130.** Additionally or alternatively, noter **274** may for instance, be configured to note a time associated with a data packet en route from base station **130** to PDN **190.** For instance, in some cases, noter **274** may note a first time associated with a particular (non-acknowledgement) data packet en route from PDN **190** to base station **130,** and if a reliable protocol such as Transmission Control Protocol (TCP) is being used, note a second time associated with an acknowledgement data packet en route from base station **130** to PDN **190** which acknowledges the particular data packet, in a manner which imparts that there is a relationship between the first time with the second time. Additionally or alternatively, noter **274** may for instance, be configured to note one or more characteristic(s) recognized by recognizer **272** (when included), if any.

Noter **274** may, for instance, be configured to note times and/or characteristics in a data structure. The data structure may be located in supervisor **170,** e.g. data structure **282** when included, or may be located externally to supervisor **170** but in a location accessible to e.g. noter **274** and/or evaluator **276.** Additionally or alternatively, noter **274** may, for instance, note times and/or characteristics to evaluator **276** for use by evaluator **276** without necessarily storing times and/or characteristics in a data structure.

Evaluator **276** may, for instance, be configured to evaluate the service provided by base station **130,** for instance at least partly based on one or more noted times. Evaluator **276** may, for instance, be configured at least partly on a result of the evaluating to determine whether or not one or more action(s) should be performed. The subject matter does not limit the way in which evaluator **276** may evaluate the service and/or determine whether or not one or more action(s) should be performed. The subject matter does not limit the action(s) regarding which evaluation may be made.

When included, handler **280** may, for instance, be configured to handle data packets. For instance, when handler **280** is included, a data packet en route from PDN **190** to base station **130** and/or a data packet en route from base station **130** to PDN **190,** may be intercepted by handler **280** and subsequently forwarded by handler **280** in order that the data packet may continue to base station **130** or PDN **190.**

When included, queue(s) **284** may, for instance, include one or more (data packet) queue(s) where data packet(s) may be queued. The subject matter does not limit the number and/or type of queue(s) **284** .

In some instances when included, data structure **282** and/or queue(s) **284** may be comprised in memory, where memory or medium may refer to any module for storing data for the short and/or long term, locally and/or remotely.

Action performer **278** may, for instance, be configured to perform one or more actions, at least partly based on a determination by evaluator **276.** The subject matter does not limit the type(s) of action(s) which may be performed by action performer **278.**

Alternatively to the example shown in **Fig. 2****,** system **170** may in some examples include fewer, more and/or different modules than shown in **Fig. 2****.** Alternatively to the example shown in **Fig. 2** the functionality of system **170** may in some examples be divided differently among the modules illustrated in **Fig. 2****.** Therefore any function attributed to a certain module in an example herein may additionally or alternatively be performed by different module(s). Alternatively to the example shown in **Fig. 2****,** the functionality of system **170** described herein may in some examples be divided into fewer, more and/or different modules than shown in **Fig. 2****.** Alternatively to the example shown in **Fig. 2****,** system **170** may in some examples include additional, less, and/or different functionality than described herein. For example, system **170** may include functionality unrelated to supervision in wireless network **100.**

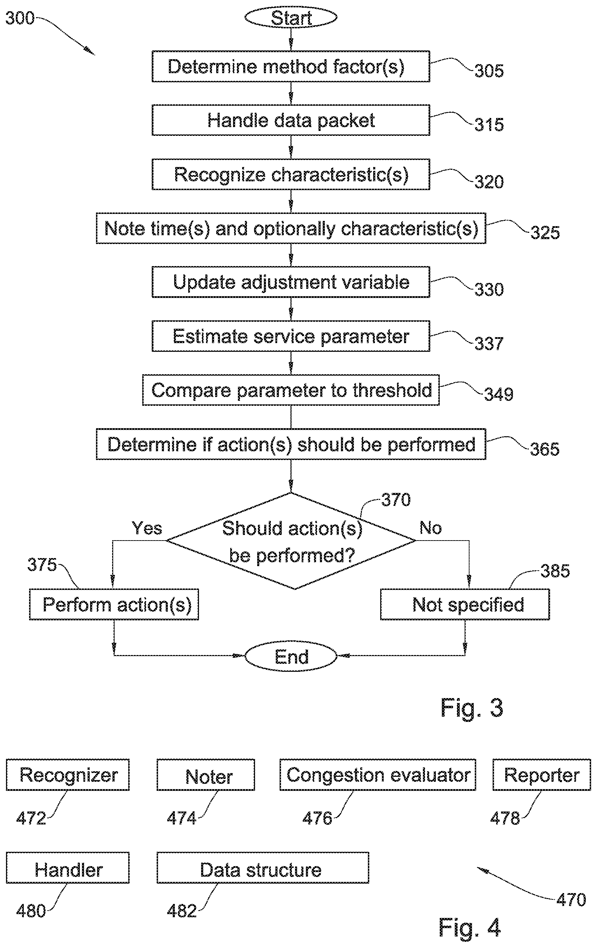

**Fig. 3** is a flowchart of an example of a supervision method **300** in accordance with the presently disclosed subject matter. Method **300** may be performed for example by supervisor **170.** Supervision method **300** may be used for instance, for supervising data in wireless system **100** in a manner which may vary between very passive to very active.

As the timing and/or circumstance(s) for performing various stage(s) in method **300** may vary depending on the example of supervision, for simplicity of description the timing and/or circumstance(s) are ignored in the description of method **300.**

In the illustrated example, in optional stage **305,** one or more factors relating to method **300** may be determined by supervisor **170,** for instance by evaluator **276.** Factor(s) may be determined, for instance, by way of received input, e.g. from an operator (via an input device such as a keypad, keyboard, mouse and/or any other input device) and/or e.g. from an external element (external to supervisor **170**) such as a planning tool, database and/or any other element. Additionally or alternatively, factor(s) may be determined, for instance, based on experience and/or applicable condition(s) (e.g. any of current time of day, location of base station **130,** etc). The subject matter does not limit the factor(s) which may optionally be determined in stage **305.** In some other examples, stage **305** may be omitted if no factors are to be determined.

Depending on the example, a data packet en route from PDN **190** to base station **130** or en route from base station **130** to PDN **190** may or may not be handled by supervisor **170,** e.g. by handler **280.** If handled, then in optional stage **315,** handler **280** may handle the data packet, e.g. intercept the data packet which may subsequently be forwarded.

In the illustrated example, in optional stage **320,** characteristic(s) of the data packet may be recognized by supervisor **170,** for instance by recognizer **272.** For instance, characteristic(s) may be recognized using deep packet inspection, from packet header(s), and/or at least partly based on earlier signaling, etc. In some other examples, stage **320** may be omitted, for instance if characteristic(s) are not relevant for later stages of method **300.**

In the illustrated example, in stage **325,** supervisor **170,** for instance noter **274,** may note one or more time(s) associated with the data packet and/or may note recognized characteristic(s). For instance, for a packet en route from PDN **190** to base station **130** a time associated with travel in that direction and possibly if there is a corresponding acknowledgement packet, a time associated with travel of the corresponding acknowledgement packet in the opposite direction may be noted.

Depending on the instance, stages **315** to **325,** when performed, may be performed for different data packets in parallel, or the stages may be completed for one data packet before being performed for another data packet.

In the illustrated example in optional stage **330,** an adjustment variable may be updated by supervisor **170,** e.g. by evaluator **276.** For instance, an adjustment variable may attempt to adjust for cause(s), not directly related to base station **130,** which may affect the value of a service parameter. The subject matter does not limit how the adjustment variable may be updated. Although updating may occur at any time, for simplicity of illustration, stage **330** is illustrated after stage **325.** In some other examples, stage **330** may be omitted, for instance if cause(s) not directly related to base station **130** may be ignored, or if an adjustment variable may not easily and/or reliably be determined. In some of these other examples where stage **330** may be omitted, the adjustment variable may be a constant configurable value.

In the illustrated example, in optional stage **337,** a service parameter may be estimated by supervisor **170** (e.g. by evaluator **276**) for an individual user equipment 110 (e.g. any one of a plurality of user equipments **110;** any one of a plurality of user equipments **110** associated with any of one or more groups served by one or more wireless transmitters; any one of a plurality of user equipments **110** which compete for service in base station **130** as scheduled by a scheduler; etc ). Additionally or alternatively, a service parameter may be estimated by supervisor **170** (e.g. by evaluator **276**) for a plurality of user equipments **110** (e.g. a plurality of user equipments **110;** a plurality of user equipments **110** associated with any of one or more groups served by one or more wireless transmitters; a plurality of user equipments **110** which compete for service in base station **130** as scheduled by a scheduler; etc). The subject matter does not limit the estimated service parameter, but for the sake of further illustration to the reader, some instances are now provided.

For instance, a possible service parameter **110** for an individual user equipment **110** may reflect and/or be indicative of one or more round trip time(s), one or more adjusted round trip time(s) (e.g. difference(s) of round trip time and round trip adjustment), one or more base station queuing time(s), one or more base station outgoing rate(s), and/or one or more quotient(s)for a round trip time or adjusted round trip time divided by the difference between an outgoing rate and an incoming rate to base station **130,** etc. Optionally, a function (e.g. average, sum, etc) may be used in estimating a possible service parameter **110.** A round trip time may for instance be estimated as the difference between a time noted for a data packet en route toward the individual UE **110** and the time noted for the corresponding acknowledgement packet. A round trip time adjustment may for instance be an adjustment variable for a round trip time which may attempt to adjust for cause(s) not directly related to any queuing time in base station **130** which may affect the round trip time. The adjustment variable may or may not be constant and/or configurable. A base station outgoing rate to an individual UE **110** may for instance be estimated as a difference between two times noted for two different acknowledgement packets (not necessarily sequential) divided by the difference between the noted sequence numbers.

Additionally or alternatively, for instance, a possible service parameter for a plurality of user equipments **110** may reflect and/or be indicative of service parameters for individual user equipments **110** included in the plurality, e.g. by way of a function such as average, sum, etc. Continuing with this instance, a possible service parameter may include an average of round trip times or functions thereof (e.g. round trip time minus round trip time adjustment) for various user equipments **110** included in the plurality, an average of base station queuing times for various user equipments **110** included in the plurality, a sum of base station outgoing rate from base station **130** for various user equipments **110** included in the plurality **110,** and/or an average of quotients for various user equipments **110,** etc. Additionally or alternatively, for instance, a possible service parameter for a plurality of user equipments **110** may not necessarily reflect and/or be indicative of service parameters for individual user equipments **110** included in the plurality but may be estimated otherwise such as a base station outgoing rate from base station **130** to the plurality of UEs **110** and/or a parameter indicative of service provision by base station **130** to only one (or to more than one) of the plurality of UEs **110,** etc.

In the illustrated example, in optional stage **349,** an estimated service parameter may be compared to a threshold by supervisor **170** e.g. by evaluator **276.**

In instance(s) where stage **330, 337** and/or **349** may be performed, the stage(s) may be performed one time or a plurality of time(s). If performed a plurality of times, the adjustment variables, estimated parameters, and/or thresholds from different iterations may relate to the same user equipment(s) **110** (and/or the same plurality of user equipments **110**) and/or to different user equipment(s) **110** (and/or to different pluralities of user equipments **110**).

One or more iteration(s) of stage **337** and/or **349** may for instance be performed as part of an evaluation of the service provided by base station **130.** An evaluation of service may, for instance, additionally or alternatively be at least partly based on one or more noted times. The subject matter does not limit how service is evaluated, and the evaluation may additionally or alternatively include stage(s) unrelated to estimating parameter(s) and/or comparing threshold(s).

In the illustrated example, in stage **365,** at least partly based on a result of the service evaluation, supervisor **170,** for instance evaluator **276,** may determine whether or not to perform one or more action(s).

In the illustrated example, if it is determined to perform at least one action (yes to stage **370**), then in the illustrated example, in stage **375** at least one action may be performed, for instance by action performer **278.** The subject matter does not limit which action(s) may be performed. For instance, examples of an action may include an action which may not necessarily affect data packet(s) traveling in wireless network **100,** and/or an action which may affect data packet(s) traveling in wireless network **100.** For the sake of further illustration an example of possible action(s) will now be described. In this example, at least one action may be performed in order to reduce the fullness of at least one queue in base station **130.** In some cases of this example, the evaluation of service provided by base station **130** may include an evaluation of the fullness of at least one queue in base station **130.** In some of these cases, the evaluation of the fullness may include estimation of a service parameter which may be negatively impacted by base station queuing time(s) and therefore may be indicative of the status (e.g. fullness) of base station queue(s). The subject matter does not limit which action(s) may be performed to reduce the fullness of queue(s), and any suitable action may be performed such as delaying packet(s), etc. See also the description with reference to Figs. **4** to **7** regarding possible examples of actions that may be performed, which may or may not be the same as action(s) performed to reduce the fullness of queue(s).

If it is not determined to perform an action (no stage **370**), then depending on the example one or more action(s) may or may not be performed in stage **385.**

In some instances, stages **365** to **385** may not necessarily be performed for each data packet, but may be performed for instance, after each predefined number of data packets.

In the illustrated example after stage **375** or **385** , method **300** may end. Method **300** or a part thereof may or may not be repeated, for instance by iterating to any appropriate stage in method **300.** If repeated the timing and/or circumstance(s) for repetition may vary depending on the example of supervision. Possibly, even if method **300** is not repeated, or between repetitions, one or more stage(s) of method **300** may be performed, for other purpose(s) and/or to maintain routine for supervisor **170.**

In some instances, stages **315** to **325** may have continued to be performed as data packets may have been handled while stages **330** to **375** were being performed, but in other examples stages **315** to **325** may not have continued to be performed while stages **330** to **375** were being performed.

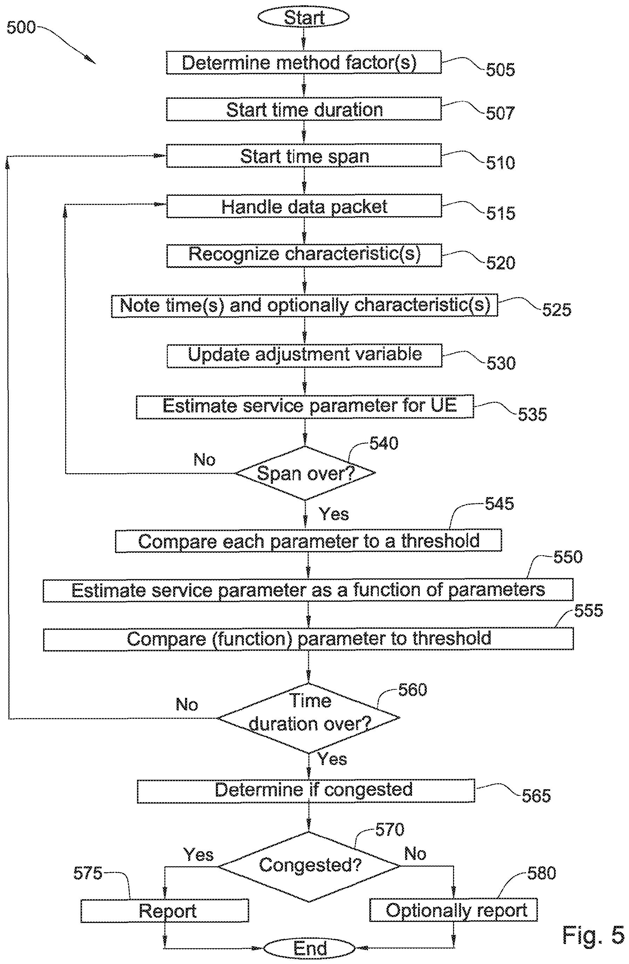

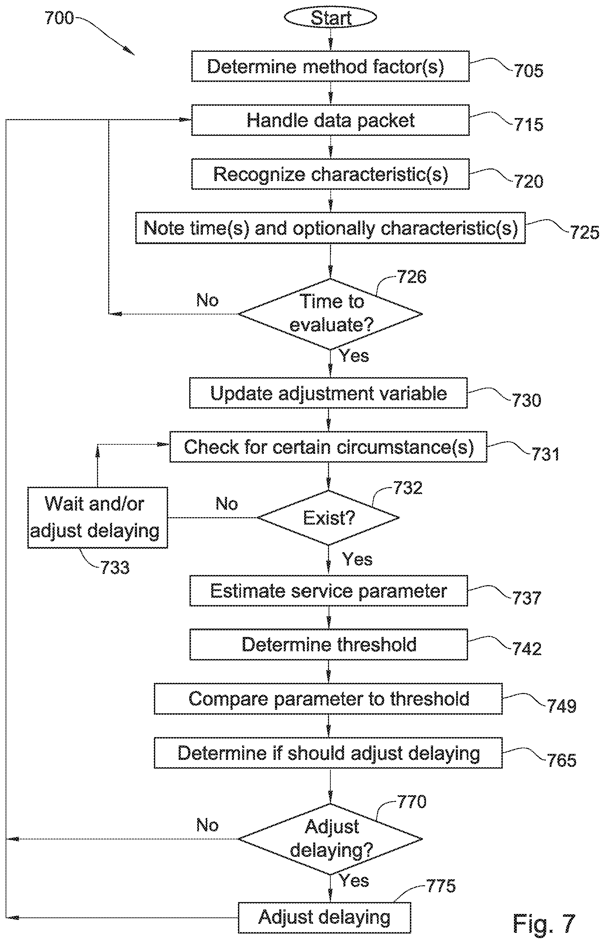

Alternatively to the example illustrated in **Fig 3****,** stages which are shown in as being executed sequentially may in some other examples be executed in parallel, and/or stages shown as being executed in parallel may in some other examples be executed sequentially. Alternatively to any of the example illustrated in **Fig. 3****,** method **300** may in some other examples include more, fewer and/or different stages than illustrated. For instance, method **300** may, for instance, additionally or alternatively include any of the stage(s) described with reference to **Fig. 5** or **Fig. 7****.** Alternatively to the example illustrated in **Fig. 3****,** stages may in some other examples be executed in a different order than illustrated.

**Fig. 4** is a block diagram of an example of an observer system **470,** in accordance with the presently disclosed subject matter. Observer system **470** may be configured to observe congestion in wireless system **100** and/or any observable situation in wireless network **100.** Observer system **470** may be an example of supervisor system **170,** and therefore the description of system **470** may not necessarily repeat details described with reference to system **170.**

In the illustrated example, observer system **470** may include a recognizer module **472,** a noter module **474,** a congestion evaluator module **476,** a reporter module **478,** and optionally a handler module **480** and/or data structure module **482.** Modules **472, 474, 476, 478, 480** and/or **482** may be examples of modules **272, 274, 276, 278, 280** and/or **282** respectively. Any module in observer **470** may be made up of any combination of software, hardware and/or firmware suitable for the function(s) attributed to the module herein. For example, observer system **470** or any part thereof may include a computer.

Handler module **480** may be optional since depending on the instance, recognizer **472** and/or noter **474** may be configured to perform function(s) relating to a data packet en route from PDN **190** and base station **130** without handler **480** handling the data packet, or may be configured to perform function(s) relating to a data packet en route from PDN **190** and base station **130** in the case that handler **480** handles the data packet. Additionally or alternatively, depending on the instance, recognizer **472** and/or noter **474** may be configured to perform function(s) relating to a data packet en route from base station **130** to PDN **190** without handler **480** handling the data packet, or may be configured to perform function(s) relating a data packet en route from base station **130** to PDN **190** in the case that handler **480** handles the data packet. For instance, a data packet on the way from PDN **190** to base station **130** or vice versa, may or may not be intercepted by handler **480** and may or may not be subsequently forwarded by handler **480** in order that the data packet may continue to base station **130** or PDN **190.**

For instance recognizer **472** may be configured to recognize one or more characteristic(s) of a data packet. The subject matter does not limit how recognizer **472** may recognize characteristic(s) of a data packet. For the purpose of illustration only, however, some examples are now presented.

For example, one or more characteristic(s) may be recognized by using deep packet inspection.

Additionally or alternatively, for example, one or more characteristic(s) may be recognized from the header(s) of the data packet. For instance, depending on the example any of sequence number, type of data packet, tunnel identifier, destination address, source address, destination port, source port etc may be recognized from header(s) of the data packet. Additionally or alternatively, for instance, the layer 7 header may indicate the type of user traffic such as browsing, streaming video, streaming audio, downloading, etc. Additionally or alternatively, for instance, for a data packet which is an acknowledgement data packet such as in a reliable protocol, e.g. TCP , a possible characteristic may be the acknowledgement number which enables correspondence to corresponding data packet(s) for which the acknowledgement data packet is acknowledging receipt.

Additionally or alternatively, for example, one or more characteristic(s) may be recognized at least partly based on previous signaling in wireless network **100.** For instance, a group (served by a wireless transmitter) and/or base station identifier and/or UE identifier may have been determined from previous signaling. The signaling may have included, for instance, a Service Area Identifier (or the equivalent) which may be used to identify a service area comprising one or more groups served by one or more wireless transmitters in the same location area and may therefore be considered to be an example of a group (served by a wireless transmitter) and/or base station identifier. The signaling may have additionally or alternatively included, for instance, a permanent Non-Access Stratum UE identity (or equivalent) which may be considered to be an example of a UE identifier. A group (served by a wireless transmitter) and/or base station identifier and/or a UE identifier may have been stored in an accessible location to recognizer **472,** perhaps in association with an associated identifier (e.g. tunnel identifier, destination address, source address, destination port and/or source port etc) which may be included in a data packet header, so that recognizer **472** may be configured to recognize that the data packet relates to a certain group served by a wireless transmitter, base station, and/or UE **110** at least partly based on the stored identifier(s). For instance, recognizer **472** may thereby be capable of recognizing the particular UE **110** for which the data packet is destined or from which the data packet originated. Additionally or alternatively, for instance, recognizer **472** may thereby be capable of recognizing the particular group served by a wireless transmitter and/or base station **130** associated with the particular UE **110** for which the data packet is destined or from which the data packet originated.

Noter **474** may, for instance, be configured to note a time associated with a data packet en route from PDN **190** to base station **130,** e.g. any of the time that the packet passes the location of noter **474** (e.g. without handling), the time the data packet is intercepted by handler **480,** the time the data packet is forwarded by handler **480,** etc. Additionally or alternatively, noter **474** may for instance, be configured to note a time associated with a data packet en route from base station **130** to PDN **190,** e.g. any of the time that the packet passes the location of noter **474** (e.g. without handling), the time the data packet is intercepted by handler **480,** the time the data packet is forwarded by handler **480,** etc. The data packet traveling in either direction may or may not be an acknowledgement data packet. For instance if a reliable protocol such as TCP is being used, an acknowledgement data packet may be sent to acknowledge receipt for any bytes prior to a certain sequence number. In some cases, noter **474** may note a first time associated with a particular (non-acknowledgement) data packet traveling from PDN **190** to base station **130** and note a second time associated with an acknowledgement data packet traveling from base station **130** to PDN **190** which acknowledges the particular data packet, in a manner which imparts that there is a relationship between the first time and the second time (and/or imparts that there is a relationship between both times and the particular (non-acknowledgement) data packet).

Additionally or alternatively, noter **474** may, for instance, be configured to note one or more characteristic(s) recognized by recognizer **472.** For instance, noter **474** may in some cases reference one or more noted time(s) to any of a sequence number, UE identifier, group (served by a wireless transmitter) and/or base station identifier, data packet type, etc.

Noter **474** may, for instance, be configured to note times and/or characteristics in a data structure. The data structure may be located in observer **470,** e.g. data structure **482** when included, or may be located externally to observer **470** but in a location accessible to e.g. noter **474** and/or congestion evaluator **476.** Additionally or alternatively, noter **474** may note the times and/or characteristics to congestion evaluator **476** for use by evaluator **476** without necessarily storing times and/or characteristics in a data structure.

Congestion evaluator **476** may, for instance, be configured to evaluate whether or not a set comprising one or more groups served by one or more wireless transmitters is congested. Depending on the example, a set may include all of the group(s) serviced by base station **130** or may include fewer group(s) than all the group(s) serviced by base station **130.** The subject matter does not limit the way in which congestion evaluator **476** may evaluate congestion. Some examples of stages which congestion evaluator **476** may perform to evaluate whether or not a set is congested are described below with reference to **Fig. 5****.**

Additionally or alternatively, congestion evaluator **476** may, for instance, be configured to evaluate one or more parameter(s) relating to base station service, and/or evaluate with respect to observable situation(s) in wireless network **100** without necessarily evaluating whether or not a set is congested.

Reporter **478** may, for instance, be configured to output a report of congestion, if congestion evaluator **476** determined that a set is congested. Optionally, reporter **478** may, for instance, be configured to output a report of non-congestion, if congestion evaluator **476** determined that a set is not congested. Additionally or alternatively, reporter **478** may, for instance, be configured to output a report regarding base station service, not necessarily relating to congestion. The subject matter does not limit the content and format of any report outputted by reporter **478** and/or the destination of the output. For instance, if determined that there is congestion a report may include an indication of congestion, and/or may indicate a level of congestion. For instance, the report may be outputted to an operator (e.g. via a display, printer and/or any other output device), and/or to an element external to observer **470** (e.g. a planning tool, database, and/or any other element).

Alternatively to the example shown in **Fig. 4****,** system **470** may in some examples include fewer, more and/or different modules than shown in **Fig. 4****.** Alternatively to the example shown in **Fig. 4** the functionality of system **470** may in some examples be divided differently among the modules illustrated in **Fig. 4****.** Therefore any function attributed to a certain module in an example herein may additionally or alternatively be performed by different module(s). Alternatively to the example shown in **Fig. 4****,** the functionality of system **470** described herein may in some examples be divided into fewer, more and/or different modules than shown in **Fig. 4****.** Alternatively to the example shown in **Fig. 4****,** system **470** may in some examples include additional, less, and/or different functionality than described herein. For example, system **470** may include functionality unrelated to observation in wireless network **100.**

**Fig. 5** is a flowchart of an example of an observation method **500** in accordance with the presently disclosed subject matter. Method **500** may be performed for example by observer **470.** Observation method **500** may be used for instance, for observing congestion in wireless system **100** and/or observing any situation in wireless network **100.** Observation method **500** may be an example of supervision method **300,** and therefore the description of method **500** may not necessarily repeat details described with reference to method **300.**

In the illustrated example, in optional stage **505,** one or more factors relating to method **500** may be determined, by observer **470,** for instance by congestion evaluator **476.** Factor(s) may be determined by way of received input, e.g. from an operator (via an input device such as a keypad, keyboard, mouse and/or any other input device) and/or from an external element (external to observer **470**) such as a planning tool, database and/or any other element. Additionally or alternatively, factor(s) may be determined based on experience and/or applicable condition(s) (e.g. any of current time of day, location of set for which congestion is being evaluated, etc). Stage **505** may be an example of stage **305.**

The subject matter does not limit the factor(s) which may be determined in stage **505,** but for the sake of further illustration to the reader, some instances will now be presented. For instance, factor(s) may include any of the following: how frequently congestion is evaluated, threshold(s), a time span during which a particular user equipment **110** would need to be associated with a set (at any time during the time span) in order for the particular user equipment **110** to be considered during the congestion evaluation, service parameter(s) associated with any user equipment **110,** initial adjustment variable(s) (if not constant but configurable), how to update an adjustment variable (if not constant), constant adjustment variable (if constant and configurable), minimum value for adjustment variable (if not constant but configurable), a time duration (e.g. which may or may not be equivalent to the time span) for which congestion is evaluated, function(s) of user equipment service parameters, the number of time(s) during a time duration that a comparison is made to a threshold, how to determine whether or not a set is congested based at least partly on the comparison result, a percentage of user equipments for evaluating congestion, when to report, and/or what to report, etc. In some other examples, stage **505** may be omitted if no factors are to be determined.

Optionally, method **500** or a part thereof (e.g. from stage **510** until the end) may be repeated at any frequency. For instance the frequency may depend on a determination made in stage **505.**

In the illustrated example, in stage **507,** a time duration may begin. A time duration may be a duration for which congestion is evaluated as will be explained in more detail with reference to stage **560.**

In the illustrated example, in stage **510,** a time span may begin. When possible, a service parameter may be estimated for each of a plurality of user equipments **110** associated with a set (at any time) during that time span as will be described below. As will be described below, it may not necessarily be possible to estimate a performance parameter for every user equipment **110** which may be associated with the set during that time span due to lack of information.

In the illustrated example, in optional stage **515,** a data packet traveling in either direction (from PDN **190** to base station **130** servicing the set or from base station **130** to PDN **190**) may optionally be handled by observer **470,** e.g. by handler **480** intercepting and subsequently forwarding the packet (e.g. after stage **520**). However, in some other examples, stage **515** may be omitted and the data packet may not be handled. Stage **515** may be an example of stage **315.**

In the illustrated example, in stage **520,** characteristic(s) of the data packet may be recognized by observer **470,** for instance by recognizer **472.** For instance, characteristic(s) may be recognized using any of deep packet inspection, from packet header(s), and/or at least partly based on earlier signaling, etc. Stage **520** may be an example of stage **320.**

In the illustrated example, in stage **525,** observer **470,** for instance noter **474,** may note one or more time(s) associated with a data packet and/or recognized characteristic(s). For instance, for a packet en route from PDN **190** to base station **130** the time that the time that the packet passes the location of noter **474** (e.g. without handling), the time the data packet is intercepted, or the time the data packet is forwarded may be noted. Possibly, if there is a corresponding acknowledgement data packet, a time for the corresponding acknowledgement packet such as the time the acknowledgement packet passes the location of noter **474** (e.g. without handling), the time the acknowledgement packet is intercepted, or the time the acknowledgement packet is forwarded may be noted, e.g. with reference to the corresponding data packet which travelled in the direction from PDN **190** to base station **130.** Stage **525** may be an example of stage **325.**

In the illustrated example in optional stage **530,** an adjustment variable may be updated by observer **470,** e.g. by congestion evaluator **476.** For instance, assume that a service parameter for user equipment **110** for which the data packet is destined is at least partly dependent on the time noted for the data packet and the time noted for the corresponding acknowledgement data packet. (If the acknowledgement data packet acknowledged more than one data packet which traveled toward destined user equipment **110,** it is assumed herein for simplicity of description that the noted time is the time associated with the last acknowledged data packet. However in other examples the time may be a function of times associated with the acknowledged data packets, mutatis mutandis). The difference between the time noted for the data packet traveling in the direction toward user equipment **110** and the time noted for the corresponding acknowledgement data packet may be caused by one or more causes, and may not necessarily be solely due to base station queuing time (e.g. time between when the data packet arrived at base station **130** and when the data packet left base station **130** on the way to user equipment **110** which may reflect the service provided by base station **130** to user equipment **110**). Cause(s) unrelated to the base station queuing time may include cause(s) related to the base station (but not to the base station queuing time) and/or cause(s) unrelated to the base station. Depending on the instance, any cause(s) unrelated to the base station queuing time may be ignored, or an adjustment variable may be estimated in order to attempt to adjust for these other cause(s). The adjustment variable associated with a specific parameter may be particular to user equipment 110, may be common to all group(s) served by wireless transmitter(s) in the set, or may be common to a subset of groups served by wireless transmitter(s) comprised in the set.

The subject matter does not limit how the adjustment variable may be updated, but for the sake of further illustration to the reader, an instance is now provided.

Consider that the adjustment variable is trying to estimate the minimum period between when a certain data packet traveling toward UE **110** would be observed (with or without handling) by observer **470** and a corresponding acknowledgement would be observed (with or without handling) by observer **470** when there would be practically no queuing time between the time of arrival of the certain data packet at base station **130** and the time of leaving of the certain data packet from base station **130,** and therefore the length of the period would be dependent on cause(s) other than the base station queuing time. Such an adjustment variable is also termed herein as "round trip time adjustment". For instance such an adjustment variable may be initially updated (set) to a value such as 10 or 20 ms. The adjustment variable may be reset to such a value, for instance any time wireless network **100** may be reconfigured (e.g. adding, changing, and/or deleting an element in wireless network **100**). The adjustment variable may optionally be updated by slowly being increased (e.g. 1 ms per hour). However, if the difference between the time noted for a data packet traveling toward user equipment **110** and the time noted for the corresponding acknowledgement data packet is less than the current adjustment variable, the adjustment variable may be updated to equal a minimum value (e.g. initial value) so as to reflect a minimum period. If the adjustment variable is specific to a particular user equipment **110,** then the adjustment variable may be updated to the minimum value only if the difference relates to that user equipment **110,** but if the adjustment variable is common to all groups (s) or to a subset of group(s) comprised in a set, then the adjustment variable may be updated to the minimum value provided the difference relates to any user equipment **110** associated with any of the group(s) or with any of the subset of group(s).

Although the updating in stage **530** may occur at any time, as described above, for simplicity of illustration, stage **530** is illustrated between stages **525** and **535.** Stage **530** may be an example of stage **330.**

In some other examples, stage **530** may be omitted, for instance if cause(s) not directly related to base station **130** may be ignored, or if an adjustment variable may not easily and/or reliably be determined. In some of these other examples where stage **530** may be omitted, the adjustment variable may be a constant configurable value.

In the illustrated example, in stage **535,** a service parameter may be estimated for a given user equipment **110** (to which the current data packet is destined) by observer **470,** for instance by congestion evaluator **476.** The service parameter may provide some sort of indication of service that is being provided by base station **130** to that user equipment **110.** Possibly, a service parameter may be negatively affected by the queuing time in base station **130,** and in this case the parameter may be considered indicative of base station queuing time. Stage **535** may be an example of stage **337.** The subject matter does not limit the estimated service parameter, but for the sake of further illustration to the reader, some instances are now provided.

For instance, a possible service parameter may estimate a round trip time (e.g. the difference between the time noted for the current data packet traveling to the given user equipment **110** and the time noted for the corresponding acknowledgement data packet). Additionally or alternatively, for instance a possible service parameter may estimate a function (e.g. average, sum, etc) of a plurality of round trip times, e.g. with each round trip time e.g. reflecting the time noted for a certain data packet traveling to the given user equipment **110** and the time noted for the corresponding acknowledgement data packet. For instance, additionally or alternatively, a possible service parameter may estimate an adjusted round trip time (e.g. round trip time minus a round trip time adjustment). Additionally or alternatively, for instance a possible service parameter may estimate a function (e.g. average, sum, etc) of a plurality of adjusted round trip times, with each round trip time e.g. reflecting a round trip time and round trip time adjustment. Additionally or alternatively, for instance, a possible service parameter may be indicative of base station queuing time. Additionally or alternatively, for instance, a possible service parameter may be a function (e.g. average, sum, etc.) of parameters indicative of base station queuing times. Additionally or alternatively, for instance, a possible service parameter may estimate a base station outgoing rate (e.g. the difference between two times noted for two different acknowledgement packets, not necessarily sequential, from the given UE **110** divided by the difference between the noted sequence numbers). It is noted that since an outgoing rate may rely on acknowledgement packets which are not necessarily sequential, meaning not necessarily following one another in order, an outgoing rate may possibly be calculated even when intervening packet(s) relate to a protocol which is not necessarily reliable, e.g. User Datagram Protocol (UDP). Additionally or alternatively, for instance, a possible service parameter may estimate a function (e.g. average, sum, etc) of a plurality of outgoing rates, with each outgoing rate e.g. reflecting two times noted for acknowledgement packets and sequence numbers. Additionally or alternatively, for instance, a possible service parameter may estimate a quotient for a round trip time or adjusted round trip time divided by the difference between an outgoing rate and an incoming rate to base station **130.** Additionally or alternatively, for instance, a possible service parameter may estimate a function (e.g. average, sum, etc) of a plurality of quotients. If times were already noted for a plurality of packets destined to the given UE **110** during the time span, the estimated parameter in this iteration of stage **535** may reflect the plurality of packets, a subset of the packets or even only one or two (e.g. last) of the packets. If the estimated parameter for the given UE **110** includes a function (e.g. average, sum, etc), the function may be updated as necessary, e.g. in iteration(s) of stage **535** during the time span.

It is noted that even though a service parameter may be estimated for a particular user equipment **110,** the service parameter may be affected by the service provided to other user equipments **110,** if any, associated with the set (and may possibly be affected by the service provided to other user equipments **110** associated with base station **130,** if any, even if not necessarily associated with the same set, when the base station services more than the set). For instance, assuming other user equipment(s) **110** may be associated with the set and that base station **130** includes a scheduler which does not want to always starve all of these other user equipment(s) **110** in the set, then the service parameter for particular user equipment **110** may possibly at least sometimes reflect a poorer service than if only the particular user equipment **110** was being serviced in the set.

Depending on the instance, stages **515** to **535** may be performed for different data packets in parallel, or the stages may be completed for one data packet before being performed for another data packet.

In the illustrated example, in stage **540,** it is determined if the time span has elapsed. If no then in the illustrated example method **500** iterates for further data packet(s), if any.

It may be possible that for one or more UE **110** associated with the set (at any time) during the time span, a service parameter may not necessarily be estimated. For instance a service parameter may not be estimated if there is insufficient information. There may be insufficient information, e.g. if a data packet destined for given UE **110** passed or was handled by observer **470** before the beginning of the time span, even if the corresponding acknowledgement data packet is observed by observer **470** during the time span, if the time the acknowledgment data packet from given UE **110** passes or is handled by observer **470** is after the time span even if the corresponding data packet traveling from PDN **190** to base station **130** was observed by observer **470** during the time span, if no acknowledgement is sent (e.g. in UDP), if no data packet en route given UE **110** nor corresponding acknowledgement data packet is observed by observer **470** during the time span, and/or if only one acknowledgement data packet is observed by observer **470** during the time span (and two are needed to estimate the service parameter), etc.

If the time span has elapsed, then in the illustrated example, method **500** may proceed to the next stage.

In the illustrated example, in optional stage **545,** for each of a plurality of UEs **110** for which a service parameter was estimated, the estimated service parameter may be compared to a threshold by observer **470,** e.g. by congestion evaluator **476.** Stage **545** may be an example of stage **349.** The subject matter does not limit the threshold. The threshold may be the same for all UEs **110** in the set, may vary for different UEs **110,** may be constant over time, and/or may vary over time, etc. In some examples, stage **545** may be omitted, for instance if stage **555** is performed instead.

In the illustrated example, in optional stage **550** observer **470,** e.g. congestion evaluator **476,** may estimate a service parameter for the plurality of UE's **110** (for which respective service parameters were estimated) which is a function of the respective estimated service parameters. For instance, the function may be an average or a sum of the estimated parameters for the plurality of UEs **110.** Possibly, a service parameter may be negatively affected by the queuing time in base station **130** for data packet(s) destined for any of the plurality of UEs **110,** and in this case the parameter may be considered indicative of base station queuing time. Stage **550** may be an example of stage **337.**

In the illustrated example, in optional stage **555,** a service parameter which was estimated in stage **550** by way of a function of the estimated parameters for the plurality of UEs **110** may be compared to a threshold by observer **470,** e.g. by congestion evaluator **476.** Stage **555** may be an example of stage **349.** The subject matter does not limit the threshold. The threshold may be constant over time, and/or may vary over time, etc. In some examples, stages **550** and/or **555** may be omitted, for instance if stage **540** was performed instead.

In the illustrated example, in stage **560** it may be determined if a time duration for which congestion is being evaluated is over. For instance, a time duration may include an integer number of time spans so that stage **545** and/or **555** may be repeated more than once in order to determine if the set is congested. Therefore in the illustrated example if the result of the determination is that the time duration is not over, method **500** may iterate to stage **510** for another time span. In examples where the time duration is different than a time span but may not include an integer number of time spans, a similar consequence of the time duration not being over may occur, mutatis mutandis. If only a comparison relating to one time span is necessarily made (in stage **545** and/or **555**) in order to determine if the set is congested then the time duration may be the same as the time span and separate stages **507** and **560** may be omitted.

If the time duration is over (yes to stage **560**) then in stage **565,** observer **470,** e.g. congestion evaluator **476,** may determine whether or not the set is congested at least partly based on comparison result(s). Stage **565** may be an example of stage **365.**

The subject matter does not limit how it may be determined whether or not the set may be congested, but for the sake of further illustration to the reader, some instances are now presented.

For instance, assume that during the time duration, there may be a predetermined percentage of user equipments **110** associated with a set for which the respective estimated parameter when compared to a respective threshold is indicative of poor service to the respective user equipment **110.** Further assuming a parameter of round trip time or adjusted round trip time estimated for any user equipment **110,** a particular user equipment **110** may be considered to be poorly serviced, if e.g. the estimated parameter is above a threshold. In this instance, if for a predetermined percentage of user equipments **110** the comparison is indicative of poor service to the respective UE **110,** then it may be determined that the set is congested. If stage **545** and/or **555** is performed more than once during the predetermined time duration, then depending on the instance, it may be determined that the set is congested if there is a predetermined percentage (although not necessarily comprising each time the same user equipments **110**) each time the comparison is made, at least one time that the comparison is made, and/or most of the time(s) that a comparison is made, etc.

Additionally or alternatively, assume that during the time duration, when comparing to a threshold a service parameter, which is an average of respective service parameters estimated for a plurality of user equipments **110** associated with a set, the result of the comparison is indicative of poor service to the set. Assuming an estimated parameter of round trip time or adjusted round trip time for any user equipment **110,** it may be considered that there is poor service to the set if the average of the estimated parameters is above the threshold. In this instance, it may be determined that the set is congested. If stage **545** and/or **555** is performed more than once during the predetermined time duration, then depending on the instance, it may be determined that the set is congested if the average is indicative of poor service when compared to the threshold (although the average may not necessarily be each time a function of service parameters for the same user equipments **110**) each time the comparison is made, and/or at least one time that the comparison is made, most of the time(s) that a comparison is made, etc.

Possibly, if a report of congestion may include a level of congestion, stage 565 may also include a determination of a level of congestion. The subject matter does not limit how a level of congestion is determined but for the sake of further illustration to the reader, some instances are now provided.

For instance, assuming that a predetermined percentage of UEs **110** having estimated service parameters above or below threshold(s) it is indicative of congestion, the actual percentage (equal to or higher than the predetermined percentage) may be indicative of the level of congestion. Continuing with this instance, if a percentage of say 80% is indicative of congestion, then a percentage of say 90% may possibly be indicative of higher congestion than a percentage of say 85%. Additionally or alternatively, for instance, the amount that an estimated parameter for a UE **110** may be above or below a threshold may be indicative of the congestion level. Continuing with this instance, when considering a predetermined percentage of UEs **110** with an estimated parameter above an associated threshold as indicative of congestion, the average amount that an estimated parameter is above a threshold, the maximum amount that an estimated parameter is above a threshold, and/or the minimum amount that an estimated parameter is above a threshold, etc may be indicative of the congestion level. Continuing with this instance, if the maximum amount (and/or average, minimum, etc) above the threshold is lower, then it may possibly be indicative of a lower congestion level than if the maximum amount (and/or average, minimum, etc) is higher. Additionally or alternatively, for instance, assuming that an average of estimated parameters being above or below a threshold is indicative of congestion, the amount that the average is above or below the threshold may be indicative of the congestion level. Continuing with this instance, if the amount above the threshold is lower, then it may possibly be indicative of a lower congestion level than if the amount were higher. Additionally or alternatively, for instance, assuming that a comparison is made a plurality of times, and a certain number of time(s) out of the plurality that comparison result(s) is/are indicative of congestion may be considered to be indicative of congestion, then the actual number of time(s) equal to or greater than the certain number of time(s) that comparison result(s) is/are indicative of congestion may be indicative of the level of congestion. Continuing with this instance, if comparisons are performed four times, and it is considered indicative of congestion if at least one time the comparison result is indicative of congestion, then if four times the comparison result is indicative of congestion, it may possibly be indicative of a higher level of congestion than if only once the comparison result is indicative of congestion.

Assuming stage **545** and/or **555** are performed a plurality of times during a time duration, the determination in stage **565** may be based on result(s) of comparing from one or more iteration(s) of stage **545** and/or **555,** and therefore may be considered to be at least partly based on a result of comparing from at least one of the iterations.

In the illustrated example, if it is determined that the set is congested (yes to stage **570**), then in the illustrated example in stage **575** a report relating to the congestion may be outputted by observer **470,** e.g. by reporter **478.** If not (no to stage **570**), then in the illustrated example in stage **580** a report may or may not be outputted. Stage **570** may be an example of stage **370.** Stage **575** may be an example of stage **375.** Stage **580** may be an example of stage **385.**

As mentioned above, a report may be of any format and may include any content. For instance if congestion is determined the report may include an indication of congestion and/or an indication of the level of congestion. If a report is outputted when it is not determined that the set is congested, the report may include for instance an indication that it was not determined that the set was congested. The report may be outputted to an operator and/or to an external element.

Additionally or alternatively, a report may be outputted which may not necessarily be related to congestion, but may additionally or alternatively be related to one or more observable situation(s) in wireless network **100.** For instance, a report may include estimated parameter(s), and/or an indication of a relationship between estimated parameter(s) and respective threshold(s). In some cases of this instance, such a report may regard the status of one or more queue(s) in base station **130,** e.g. if the estimated parameter(s) may be negatively impacted by base station queuing time(s) and therefore may be indicative of the status of base station queue(s). (The status of base station queue(s) may be an example of an observable situation in wireless network **100**.)

Outputting a report (or equivalently reporting) may be considered an example of an action which may not necessarily affect data packet(s) en route between PDN **190** and base station **130** (e.g. traveling from PDN **190** to base station **130** and/or from base station **130** to PDN **190**).

In the illustrated example, method **500** may end. Method **500** or a part thereof may or may not be repeated, for instance by iterating to any appropriate stage in method **500.** If repeated, the frequency of repetition may be dependent on the desired frequency for evaluating congestion. Possibly, even if method **500** is not repeated, or between repetitions, one or more stage(s) of method **500** may be performed, for other purpose(s) and/or to maintain routine for observer **470.**

Alternatively to the example illustrated in **Fig 5****,** stages which are shown in as being executed sequentially may in some other examples be executed in parallel, and/or stages shown as being executed in parallel may in some other examples be executed sequentially. Alternatively to any of the example illustrated in **Fig. 5****,** method **500** may in some other examples include more, fewer and/or different stages than illustrated. Alternatively to the example illustrated in **Fig. 5****,** stages may in some other examples be executed in a different order than illustrated.

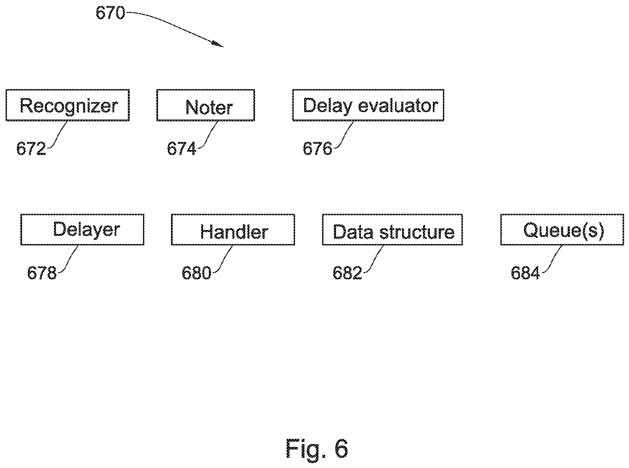

**Fig. 6** is a block diagram of an example of an affector system **670,** in accordance with the presently disclosed subject matter. Affector system **670** may be configured to affect data in wireless network **100.** Affector system **670** may be an example of supervisor system **170** and therefore the description of system **670** may not necessarily repeat details described with reference to system **170.**

In the illustrated example, affector **670** may include a recognizer module **672,** a noter module **674,** a delay evaluator module **676,** a delayer module **678,** a handler module **680,** a queue(s) module **684,** and optionally a data structure module **682.** Modules **672, 674, 676, 678, 680, 682** and/or **684** may be examples of modules **272, 274, 276, 278, 280, 282** and/or **284** respectively. Any module in affector **670** may be made up of any combination of software, hardware and/or firmware suitable for the function(s) attributed to the module herein. For example, affector system **670** or any part thereof may include a computer.

Handler module **680,** for instance, may be configured to handle data packets. For instance, a data packet en route from PDN **190** to base station **130** may be intercepted by handler **680** and subsequently forwarded by handler **680** in order that the data packet may continue to base station **130** or PDN **190.** Alternatively, a data packet en route from PDN **190** to base station **130** may not be handled by handler **680.** For instance the data packet may not necessarily be handled if the packet is not to be delayed. Depending on the instance, a data packet en route from base station **130** and PDN **190** may or may not be handled.

For instance recognizer **672** may be configured to recognize one or more characteristic(s) of a data packet. The subject matter does not limit how recognizer **672** may recognize characteristic(s) of a data packet. For the purpose of illustration only, however, some examples are now presented.

For example, one or more characteristic(s) may be recognized using deep packet inspection.

Additionally or alternatively, for example, one or more characteristic(s) may be recognized from the header(s) of the data packet. For instance, depending on the example any of sequence number, type of data packet, tunnel identifier, destination address, source address, destination port, source port etc may be recognized from header(s) of the data packet. Additionally or alternatively, for instance, the layer 7 header may indicate the type of user traffic such as browsing, streaming video, streaming audio, downloading, etc. Additionally or alternatively, for instance, for a data packet which is an acknowledgement data packet such as in a reliable protocol, e.g. TCP , a possible characteristic may be the acknowledgement number which enables correspondence to corresponding data packet(s) for which the acknowledgement data packet is acknowledging receipt.

Additionally or alternatively, for example, one or more characteristic(s) may be recognized at least partly based on previous signaling in wireless network **100.** For instance, possibly a group (served by a wireless transmitter) and/or base station identifier and/or UE identifier may have been determined from previous signaling. The signaling may have included, for instance, a Service Area Identifier (or the equivalent) which may be used to identifier a service area comprising one or more groups served by one or more wireless transmitters in the same location area and may therefore be considered to be an example of a group (served by a wireless transmitter) and/or base station identifier. The signaling may have additionally or alternatively included, for instance, a permanent Non-Access Stratum UE identity (or equivalent) which may be considered to be an example of a UE identifier. A group (served by a wireless transmitter) and/or base station identifier and/or a UE identifier may have been stored in an accessible location to recognizer **672,** perhaps in association with an associated identifier (e.g. tunnel identifier, destination address, source address, destination port, and/or source port etc) which may be included in a data packet header, so that recognizer **672** may recognize that the data packet relates to a certain group served by a wireless transmitter, base station, and/or UE at least partly based on the stored identifier(s). For instance, recognizer **672** may thereby recognize UE **110** for which the data packet is destined or from which the data packet originated. Additionally or alternatively, for instance, recognizer **672** may thereby recognize the group served by a wireless transmitter and/or base station **130** associated with UE **110** for which the data packet is destined or from which the data packet originated.

Noter **674** may, for instance, be configured to note a time associated with a data packet en route from PDN **190** to base station **130,** for instance any of the time the data packet passes noter **675** (e.g. without handling), the time the data packet is intercepted by handler **680,** the time the data packet is forwarded by handler **680,** etc. Additionally or alternatively, noter **674** may for instance, be configured to note a time associated with a data packet en route from base station **130** to PDN **190,** for instance any of the time the data packet passes noter **674** (e.g. without handling), the time the data packet is intercepted by handler **680,** the time the data packet is forwarded by handler **680,** etc. The data packet traveling in either direction may or may not be an acknowledgement data packet. For instance if a TCP protocol is being used, an acknowledgement data packet may be sent to acknowledge receipt for any bytes prior to a certain sequence number. For instance, in some cases, noter **674** may note a first time associated with a particular (non-acknowledgement) data packet traveling from PDN **190** to base station **130** and note a second time associated with an acknowledgement data packet traveling from base station **130** to PDN **190** which acknowledges the particular data packet , in a manner which imparts that there is a relationship between both times (and/or imparts that there is a relationship between both times and the particular (non-acknowledgement) data packet).

Additionally or alternatively, noter **674** may for instance, be configured to note one or more characteristic(s) recognized by recognizer **672.** For instance, noter **674** may in some cases reference one or more noted time(s) to any of a sequence number, UE identifier, group (served by a wireless transmitter) and/or base station identifier, data packet type, etc.

Noter **674** may, for instance, be configured to note times and/or characteristics in a data structure. The data structure may be located in affector **670,** e.g. data structure **682** when included, or may be located externally to affector **670** but in a location accessible to noter **674** and/or delay evaluator **676.** Additionally or alternatively, noter **674** may note the times and/or characteristics to evaluator **676** for use by evaluator **676** without necessarily storing times and/or characteristics in a data structure.

Delay evaluator **676** may, for instance, be configured to evaluate whether or not to adjust delaying, e.g. whether or not to delay data packet(s) and/or whether or not to stop delaying data packet(s). Herein, the term delay may refer to a delay which is for a finite period of time, or for an infinite period of time. For instance, a packet may be delayed for an infinite period of time by dropping the packet, and the dropping may occur after first delaying the packet for a finite period of time, or may occur without first delaying the packet for a finite period of time.

The subject matter does not limit the manner in which delay evaluator **676** may determine whether or not to adjust delaying. However for further illustration to the reader some examples are now provided. For example, certain UE(s) **110** may be prioritized and therefore data packet(s) destined for those UE(s) **100** may be less likely to be delayed and/or more likely to have delay thereof stopped. Additionally or alternatively for example, certain data packet type(s) may be prioritized and therefore data packets of those type(s) may be less likely to be delayed and/or more likely to have delay thereof stopped. Additionally or alternatively, for example it may be determined to delay data packet(s) in order to shorten the queuing time (where the shortened queuing time may be zero or longer) in base station **130,** e.g. so that data packet(s) arriving at base station **130** do not have to wait as long. Continuing with this example, the time for a certain data packet to travel from PDN **190** to UE **110** may be reduced, for instance, if one or more other data packets are delayed so as to shorten the base station queuing time. Additionally or alternatively, for example it may be determined to not delay and/or stop delaying data packet(s) in order to increase the queuing time in base station **130** (from zero or any other queuing time value), e.g. so that there may be a minimum number of data packets in base station **130** at a time. Additionally or alternatively, for example it may be determined to adjust delaying in order to attempt to obtain certain circumstance(s). Some examples of stages which delay evaluator **676** may perform to evaluate whether or not to delay data packets are described below with reference **to** **Fig. 7****.**

Queue(s) **684** may include one or more (data packet) queue(s) where data packet(s) may be queued. The subject matter does not limit the number or type of queue(s) **684.** However for further illustration some examples are now provided. For example, the number and/or type of queues **684** may be set based on the desired basis for prioritization. Additionally or alternatively, for example, there may be separate queue(s) **684** for each UE **110,** or any queue **684** may include data packet(s) destined for one or more UEs **110.** Additionally or alternatively, there may be separate queue(s) **684** for each data packet type or for each collection of data packet types, or any queue **684** may include data packet(s) of any type. Continuing with this example, there may for instance be two collections of data packet types, with one collection including data packet type(s) for which a high quality of experience for the user may depend on data packets of such type(s) being delivered to the corresponding UE **110** at a constant rate (e.g. streaming media such as video and/or audio, etc.), and another collection including data packet type(s) for which a high quality of experience for a user may be less likely to depend on data packets of such type(s) being delivered to the corresponding UE **110** at a constant rate (e.g. browsing and/or downloading, etc).

Delayer **678** may, for instance, be configured to adjust delaying. For example, delayer **678** being configured to adjust delaying may include being configured to delay data packet(s), e.g. in queue(s) **682** and/or by dropping, for instance depending on a result of the evaluation by delay evaluator **676.** Additionally or alternatively, for example delayer **678** being configured to adjust delaying may include being configured to stop delaying packet(s), e.g. by removing those data packet(s) from queue(s) **682,** for instance depending on a result of the evaluation by delay evaluator **676.**

Alternatively to the example shown in **Fig. 6****,** system **670** may in some examples include fewer, more and/or different modules than shown in **Fig. 6****.** Alternatively to the example shown in **Fig. 6** the functionality of system **670** may in some examples be divided differently among the modules illustrated in **Fig. 6**.Therefore any function attributed to a certain module in an example herein may additionally or alternatively be performed by different module(s). Alternatively to the example shown in **Fig. 6****,** the functionality of system **670** described herein may in some examples be divided into fewer, more and/or different modules than shown in **Fig. 6****.** Alternatively to the example shown in **Fig. 6****,** system **670** may in some examples include additional, less, and/or different functionality than described herein. For example, system **670** may include functionality unrelated to affecting data in wireless network **100.**

**Fig. 7** is a flowchart of an example of an affecting method **700** in accordance with the presently disclosed subject matter. Affecting method **700** may be performed for example by affector **670.** Affecting method **700** may be used for instance, for affecting data in wireless system **100.** Affecting method **700** may be an example of supervision method **300** and therefore the description of method **700** may not necessarily repeat details described with reference to method **300.**

In the illustrated example, in optional stage **705,** one or more factors relating to method **700** may be determined, by affector **670,** for instance by delay evaluator **676.** Factor(s) may be determined by way of received input, e.g. from an operator (via an input device such as a keypad, keyboard, mouse and/or any other input device) and/or from an external element (external to affector **670**) such as a planning tool, database and/or any other element. Additionally or alternatively, factor(s) may be determined based on experience and/or applicable condition(s) (e.g. any of current time of day, location of base station **130,** etc). Stage **705** may be an example of stage **305.**

The subject matter does not limit the factor(s) which may optionally be determined in stage **705,** but for the sake of further illustration to the reader, some instances will now be presented. For instance, factor(s) may include any of the following: the length of time interval between times of evaluating whether or not to adjust delaying, service parameter(s), one or more threshold(s), how to determine threshold(s) which may at least partly depend on current condition(s), circumstance(s) under which to evaluate whether or not to adjust delaying, number of queue(s), type(s) of queue(s), whether or not delay adjustment should uniformly affect data packet(s), prioritization scheme(s), initial adjustment variable(s) (if not constant but configurable), how to update an adjustment variable (if not constant), constant adjustment variable (if constant and configurable), minimum value for adjustment variable (if not constant but configurable), a time duration, and/or minimum rate per type of data packet for high quality of experience, etc.

In the illustrated example, in optional stage **715,** a data packet traveling from PDN **190** to base station **130**) may be handled by affector **670,** e.g. by handler **680** by intercepting and subsequently forwarding the packet (e.g. after stage **720**). A data packet travelling from base station **130** to PDN **190** may be handled by affector **670,** e.g. by handler **680** by intercepting and subsequently forwarding the packet (e.g. after stage **720**). Stage **715** may be an example of stage **315.** Alternatively, stage **715** may be omitted if the data packet is not handled.

In the illustrated example, in stage **720**, characteristic(s) of the data packet may be recognized by affector **670,** for instance by recognizer **672.** For instance, characteristic(s) may be recognized using deep packet inspection, from packet header(s), and/or at least partly based on earlier signaling, etc. Stage **720** may be an example of stage **320**.

In the illustrated example, in stage **725,** affector **670,** for instance noter **674,** may note one or more time(s) associated with a data packet and/or recognized characteristic(s). For instance, for a packet en route from PDN **190** to base station **130** the time that the data packet passes the location of noter **674** (e.g. without handling), the time the data packet is intercepted, or the time the data packet is forwarded may be noted. Possibly, if there is a corresponding acknowledgement data packet a time for the corresponding acknowledgement packet such as the time the acknowledgement packet passes the location of noter **274** (e.g. without handling), the time the data packet is intercepted, or the time the data packet is forwarded may be noted, e.g. with reference to the corresponding data packet which travelled in the direction from PDN **190** to base station **130.** Stage **725** may be an example of stage **325.**

Depending on the instance, stages **715** to **725** may be performed for different data packets in parallel, or the stages may be completed for one data packet before being performed for another data packet.

In the illustrated example, in stage **726** it may be determined by affector **670,** for instance by delay evaluator **676** whether or not it is time to evaluate delay adjustment. For instance, the length of the time interval from the last evaluation may have been determined in stage **705**. If it is not time to evaluate (no to stage **726**) then method **700** iterates to stage **715** and continues to handle data packets without evaluation.

If it is time to evaluate (yes to stage **726**) then in the illustrated example in optional stage **730**, an adjustment variable may be updated by affector **670,** e.g. by delay evaluator **676.** For instance, assume that a service parameter for user equipment **110** for which the data packet is destined is at least partly dependent on the time noted for the data packet traveling to user equipment **110** and the time noted for the corresponding acknowledgement data packet. (If the acknowledgement data packet acknowledged more than one data packet, it is assumed for simplicity of description that the noted time is the time associated with the last acknowledged data packet. However in other examples the time may be a function of the times associated with the acknowledged data packets, mutatis mutandis). The difference between the time noted for the data packet travelling in the direction toward user equipment **110** and the time noted for the corresponding acknowledgement data packet may be caused by one or more causes, and may not necessarily be solely due base station queuing time (e.g. time between when the data packet arrived at base station **130** and when the data packet left base station **130** on the way to user equipment **130** which may reflect the service provided by base station **130** to user equipment **110**.) Cause(s) unrelated to the base station queuing time may include cause(s) related to the base station (but not to the base station queuing time) and/or cause(s) unrelated to the base station. Depending on the instance, any cause(s) unrelated to the base station queuing time may be ignored, or an adjustment variable may be estimated in order to attempt to adjust for these other cause(s). The adjustment variable associated with a specific parameter may be particular to user equipment **110** or may be common to one or more group(s) served by one or more wireless transmitter(s).

The subject matter does not limit how the adjustment variable may be updated, but for the sake of further illustration to the reader, an instance is now provided.

Consider that the adjustment variable is trying to estimate the minimum period between when a certain data packet traveling toward UE **110** would pass or be handled by affector **670** and a corresponding acknowledgement packet would pass or be handled by affector **670** when there would be practically no queuing time between the time of arrival of the certain data packet at base station **130** and time of leaving of the certain data packet from base station **130,** and therefore the length of the period would be dependent on cause(s) other than the base station queuing time. Such an adjustment variable is also termed "round trip time adjustment" herein. For instance such an adjustment variable may be initially updated (set) to a value such as 10 or 20 ms. The adjustment variable may be reset to such a value, for instance any time wireless network **100** is reconfigured (e.g. adding, changing, and/or deleting an element in wireless network **100**). The adjustment variable may optionally be updated by slowly being increased (e.g. 1 ms per hour). However, if the difference between the time noted for a data packet traveling to user equipment **110** and the time noted for the corresponding acknowledgement data packet is less than the current adjustment variable, the adjustment variable may be updated to equal difference minimum value (e.g. initial value) so as to reflect a minimum period. If the adjustment variable is specific to a particular user equipment, then the adjustment variable may be updated to the minimum value only if the difference relates to that user equipment **110,** but if the adjustment variable is common to one or more group(s)served by one or more wireless transmitter(s), then the adjustment variable may be updated to the minimum value provided the difference relates to any user equipment associated with any of these group(s) served by wireless transmitter(s).

Although the updating in stage **730** may occur at any time, as described above, for simplicity of illustration, stage **730** is illustrated after stage **726.** Stage **730** may be an example of stage **330**.

In some examples, stage **730** may be omitted, for instance if cause(s) not directly related to base station **130** may be ignored, or if an adjustment variable may not easily and/or reliably be determined. In some of these other examples where stage **730** may be omitted, the adjustment variable may be a constant configurable value.

In the illustrated example, in optional stage **731,** it may be checked by affector **670,** for instance by delay evaluator **676,** whether or not certain circumstance(s) exist. For instance, in some cases it may be preferable to perform an evaluation if certain circumstance(s) exist. The subject matter does not limit the circumstance(s) but for the sake of further illustration to the reader some instances are now presented.

For instance, estimation of a parameter relating to the base station outgoing rate from base station **130** may possibly be facilitated when the round trip time or a function thereof is steady. The round trip time may be estimated as the difference between the time noted for a data packet traveling to user equipment **110** and the time noted for the corresponding acknowledgement data packet. The round trip time or a function thereof may be considered as indicative of the queuing time in base station **130.** Therefore, if the round trip time or a function thereof (e.g. round trip time minus round trip time adjustment) is steady, the base station outgoing rate may be estimated as being approximately equal to the incoming rate to base station **130.** A base station outgoing rate may be an outgoing rate from base station **130** to any one of a plurality of user equipments **110** or an outgoing rate from base station **130** to the plurality of user equipments. In this case, a steady round trip time or function thereof may be a circumstance that is checked for. The subject matter does not limit for how long the round trip or function thereof should be steady.

Additionally or alternatively, for instance, estimation of a parameter relating to a particular UE **110** whose service may be affected by other UEs **110** competing for service (for instance dependent on a scheduling algorithm of a scheduler in base station **130**), may possibly be facilitated when the other UEs **110** are not being serviced, so as to reduce the effect of service to other UEs **110** on the parameter relating to the particular UE **110** and/or to focus on reason(s) relating specifically to the particular UE **110** (such as reception conditions). In this case, non-service to competing UEs **110** may be a circumstance that is checked for. Continuing with this case, there may be a check for a parameter indicative of service provision to only one (or to more than one) of these UEs **110.**

In the illustrated example, in optional stage **732,** if it may be determined that the checked for circumstance(s) exist(s) (yes to stage **732**) then method **700** may proceed to stage **735.** If instead it may be determined that the checked for circumstance(s) do not exist (no to stage **732**) then method **700** may proceed to stage **733.**

In the illustrated example in optional stage **733,** affector **670,** for instance delay evaluator **676,** may wait until the certain circumstance(s) may be met (for a particular evaluation) and/or may instruct delayer **678** to adjust delaying in order to obtain certain circumstance(s) (for a particular evaluation) which delayer **678** may then do.

For instance, assume that initially data packets traveling toward base station **130** are handled by affector **670** but there is no delay in data packets and therefore the rate out of affector **670** (which may be approximated as the incoming rate to base station **130**) substantially equals the rate into affector **670,** e.g. with First In First Out (FIFO). Further assume that based on noted times, an average round trip time or function thereof for a plurality of UEs **110** (e.g. associated with one or more group(s) served by one or more wireless transmitter(s)) may be determined, and it is perceived that the average is increasing. In order to attempt obtaining a steady average round trip time or function thereof, (disregarding type of packet or destination UE **110** for simplicity of description), delayer **678** may delay data packets for any of these UEs **110** intercepted by handler **680,** for instance by dropping packet(s) and/or by placing the intercepted packets in queue(s) **684,** e.g. continuing to use FIFO but decreasing the rate out of affector **670** until a steady average round trip time or function thereof is obtained.

Additionally or alternatively, for instance, in order to bring about non-service to all but one of competing user equipment(s) **110,** affector **670** may intercept data packet(s) destined for any other competing user equipment(s) **110** and delay the packet(s) (e.g. by dropping data packet(s) and/or placing the data packet(s) in queue(s) **684**). For instance, affector **670** may determine that there is a parameter indicative of data packets being provided by base station to more than one of the competing user equipments **110,** and delay packet(s), in order to bring about non-service to all but one of competing user equipments **110.**

When performed, the performance of stages **731** to **733,** may optionally include estimation of a parameter (e.g. round trip time, adjusted round trip time, and/or a parameter indicative of service provision to only one [or to more than one] of competing user equipments **110,** etc), determining at least partly based on the estimated parameter whether or not to adjust delaying, and adjusting delaying if determined to do so.

In the illustrated example after stage **733,** method **700** iterates to stage **731.**

In some instances, stages **731** to **733** may be omitted, for instance if there is no advantage to performing an evaluation under certain circumstance(s). Additionally or alternatively, if more than one evaluation is performed, of which for part there is an advantage and for another part there is not advantage, then stages **731** to **733** may be performed before the part for which there is an advantage, whereas the other part may be performed without first performing stages **731** to **733.**

In the illustrated example, in stage **737,** a service parameter may be estimated for an individual user equipment **110** (e.g. any one of a plurality of user equipments **110**). A service parameter estimated for an individual user equipment **110** may provide some sort of indication of the service that is being provided to that user equipment **110.** Possibly a service parameter may be negatively affected by queuing time in base station **130,** and in this case the parameter may be considered indicative of base station queuing time. Additionally or alternatively, a service parameter may be estimated for a plurality of user equipments **110** by affector **670,** for instance by delay evaluator **276.** Stage **737** may be an example of stage **337.** The subject matter does not limit the estimated service parameter, but for the sake of further illustration to the reader, some instances are now provided.

For instance, a possible service parameter for an individual UE **110** may estimate a round trip time (e.g. the difference between the time noted for the current data packet traveling to the individual user equipment **110** and the time noted for the corresponding acknowledgement data packet). Additionally or alternatively, for instance a possible service parameter for an individual UE **110** may estimate a function (e.g. average, sum, etc) of a plurality of round trip times, e.g. with each round trip time e.g. reflecting the time noted for a certain data packet traveling to the individual user equipment **110** and the time noted for the corresponding acknowledgement data packet. For instance, additionally or alternatively, a possible service parameter for an individual UE **110** may estimate an adjusted round trip time (e.g. round trip time minus a round trip time adjustment). Additionally or alternatively, for instance a possible service parameter for an individual UE **110** may estimate a function (e.g. average, sum, etc) of a plurality of adjusted round trip times, with each round trip time e.g. reflecting a round trip time and round trip time adjustment. Additionally or alternatively, for instance, a possible service parameter for an individual UE **110** may be indicative of base station queuing time. Additionally or alternatively, for instance, a possible service parameter for an individual UE **110** may be a function (e.g. average, sum, etc.) of parameters indicative of base station queuing times. Additionally or alternatively, for instance, a possible service parameter for an individual UE **110** may estimate a base station outgoing rate (e.g. the difference between two times noted for two different acknowledgement packets, not necessarily sequential, from the individual UE **110** divided by the difference between the noted sequence numbers). It is noted that since an outgoing rate may rely on acknowledgement packets which are not necessarily sequential, meaning not necessarily following one another in order, an outgoing rate may possibly be calculated even when intervening packet(s) relate to a protocol which is not necessarily reliable, e.g. User Datagram Protocol (UDP). Additionally or alternatively, for instance, a possible service parameter for an individual UE **110** may estimate a function (e.g. average, sum, etc) of a plurality of outgoing rates, with each outgoing rate e.g. reflecting two times noted for acknowledgement packets and sequence numbers. Additionally or alternatively, for instance, a possible service parameter for an individual UE **110** may estimate a quotient for a round trip time or adjusted round trip time divided by the difference between an outgoing rate and an incoming rate to base station **130.** Additionally or alternatively, for instance, a possible service parameter for an individual UE **110** may estimate a function (e.g. average, sum, etc) of a plurality of quotients. If times were already noted for a plurality of packets destined to the individual UE **110** (e.g. since the last time of evaluation), then a possible service parameter may reflect the plurality of packets, a subset of the packets or even only one or two (e.g. last) of the packets.

It is noted that even though a service parameter may be estimated for a particular user equipment **110,** the service parameter may be affected by the service provided to other user equipments **110.** For instance, assuming other user equipment(s) **110** may be associated with any of one or more group(s) served by one or more wireless transmitter(s), which compete for service with particular user equipment **110.** Further assuming that base station **130** includes a scheduler which does not want to always starve all of these other user equipment(s) **110,** then the service parameter for particular user equipment **110** may possibly at least sometimes reflect a poorer service than if only the particular user equipment **110** was being serviced. As mentioned above, under certain circumstance(s), a service parameter may optionally be preferably estimated when no other competing UEs **110** are being serviced.

Assume that additionally or alternatively a possible service parameter may be estimated for a plurality of user equipments **110.** Such a service parameter may provide some sort of indication of the service that is being provided to the plurality of user equipments **110.** Possibly a service parameter may be negatively impacted by the queuing time in base station **130** for data packet(s) destined for any of the plurality of UE **110,** and in this case the parameter may be considered indicative of base station queuing time.

For instance, a possible service parameter estimated for a plurality of equipments **110** may include a function (e.g. average, sum, etc) of service parameters for individual user equipments **110** included in the plurality. For example, a possible service parameter for a plurality of user equipments may be estimated as an average of round trip times or functions thereof (e.g. round trip time minus round trip time adjustment) for various user equipments **110** included in the plurality. An average may reflect for instance any data packet(s) destined for any user equipment(s) **110** included in the plurality with time(s) noted since the last time of evaluation, may reflect a subset of the packets with time(s) noted since the last time of evaluation, or may only reflect one or two packets (e.g. last) with time(s) noted since the last time of evaluation for any user equipment **110** included in the plurality. Additionally or alternatively, for instance, a possible service parameter estimated for a plurality of user equipments **110** may not necessarily include a function of service parameters for individual user equipments **110** included in the plurality. For example a possible service parameter for a plurality of user equipment may include a parameter indicative that service is currently being provided by base station **130** to only one of the plurality of UEs **110,** and/or a base station outgoing rate to the plurality of user equipments **110,** etc.

As mentioned above, a base station outgoing rate for a particular UE **110** or for a plurality of UEs **110** may possibly be estimated when there is a steady round trip time or function thereof. For instance, for a base station outgoing rate for a particular UE **110,** once a round trip time or function thereof for a particular UE **110** is steady, the outgoing rate for the particular UE **110** may be estimated by affector **670,** for instance, as approximately equaling the incoming rate to base station **130** of data packet(s) destined for the particular UE **110.** The incoming rate may be approximated, say, as approximately equaling the rate that data packet(s) destined the particular UE **110** pass by and/or are forwarded by affector **670.** The rate in which the packet(s) pass by and/or are forwarded may be determined, e.g. from noted times. Similarly, for a base station outgoing rate for a plurality of UEs **110,** once the average round trip time or function thereof is steady, the base station outgoing rate may be estimated by affector **670,** for instance, as approximately equaling the incoming rate to base station **130** of packets destined for any of the plurality of user equipments **110.** The incoming rate may be approximated, say, as approximately equaling the rate that data packet(s) destined for any of the plurality of UEs **110** pass by and/or are forwarded by affector **670.** The rate in which the packet(s) pass by and/or are forwarded may be determined, e.g. from noted times.

In the illustrated example, in optional stage **742,** a threshold may be determined by affector **670,** for instance by delay evaluator **676,** for comparison with a service parameter. Possibly, a threshold may be at least partly dependent on current condition(s), and therefore may not have been determined earlier (e.g. in stage **705**). Threshold(s) determined in stage **742** may be the same for all UEs **110,** may vary for different UEs **110,** may be constant over time, and/or may vary over time, etc. The subject matter does not limit threshold(s) but for the sake of further illustration to the reader some instances are now presented.

For instance, a threshold may be dependent on a minimum required rate to enable a high quality of user experience for types of data packet(s) provided to a UE **110** or to a plurality of UEs **110.** Assume, e.g. that in stage **725,** the types of data packets may be noted. Possibly a minimum rate per type of data packet may have been determined e.g. in stage **705**. In order to determine a threshold dependent on a minimum required rate for a particular UE **110,** affector **670** may e.g. add up a minimum rate per type of data packet recently noted for that UE **110.** Additionally or alternatively in order to determine a threshold dependent on a minimum required rate for a plurality of UEs **110,** affector **670** may e.g. add up the minimum rate per type of data packet recently noted for any UE **110** in that plurality of UEs **110.** The subject matter does not limit the definition of "recently", and may include any duration, typically although not necessarily of shorter length than the interval since the last evaluation time.

Stage **742** may be omitted in some instances, or if there is a plurality of iterations of stage **749** with different threshold, stage **742** may be performed for part of the thresholds but not for another part. Any threshold, not necessarily partly dependent on current condition(s), may have been determined earlier or may be determined in stage **742.** Such a threshold may be the same for all UEs **110,** may vary for different UEs **110,** may be constant over time, and/or may vary over time, etc. The subject matter does not limit such a threshold but for the sake of further illustration to the reader some instances are now presented.

For instance, an example of a threshold which may have been determined earlier or during stage **742** may be a threshold dependent on the length of the time interval between evaluations. Additionally or alternatively, for instance, another example of a threshold which may have been determined earlier or during stage **742** may be a threshold indicative of maximum desired base station queuing time. For instance, the maximum desired base station queuing time may be a queuing time which is considered low enough to allow packets prioritized by affector **670** to not wait too long in base station **130,** where the designation of what is "not too long" is not limited by the subject matter.

In the illustrated example, in stage **749,** an estimated service parameter may be compared to a threshold by affector **670** e.g. by delay evaluator **676.** Stage **749** may be an example of stage **349.** In the illustrated example, in stage **765,** at least partly based on this estimated parameter affector **670**, for instance delay evaluator **676,** may determine whether or not to adjust delaying of at least one data packet. Stage **765** may be an example of stage **365.** The determining may or may not be at least partly based on quality of experience considerations. If based at least partly on quality of experience considerations, the subject matter does not limit the considerations nor how such considerations may be taken into account in the determining, but for the sake of further illustration to the reader some examples are presented in the description herein of method **700** with reference to thresholds, prioritization schemes, etc.

The subject matter does not limit how the estimated parameter may be taken into account in the determining. For instance, the determining may possibly take into account a relationship between parameter and threshold. The subject matter does not limit the estimated parameter, threshold, and/or manner of determining, but for the sake of further illustration to the reader, some instances are now presented.

For instance, there may be a plurality of competing user equipment(s) **110** which compete for service by base station **130.** A scheduler in base station **130** may determine how to schedule the data packets. For simplicity's sake assume the plurality of competing user equipment(s) **110** may be associated with any of one or more group(s) served by one or more wireless transmitter(s). The associated group(s) may or may not be all of the group(s) serviced by base station **130.** Assume further that in stage **725** for any data packet a group/base station identifier and a UE identifier are noted (or if affector **670** only notes packets for the group(s)/base station then the group/base station identifier may not necessarily be noted). Affector **670,** e.g. delay evaluator **676** may notice that for a given UE **110** (out of the plurality of competing UEs **110**) between the noted time a certain packet destined for the given UE **110** passed by or was forwarded by affector **670** and the time noted for an acknowledgement of a subsequent (but not necessarily sequential) packet destined for UE **110,** there were no packets for any other competing UEs **110.** For instance, any noted passing by or forwarding time of a packet destined for another competing UE **110** as well as the noted time for the corresponding acknowledgement may have been before the noted forwarding or passing by time of the certain packet. Additionally or alternatively for instance, any noted passing by or forwarding time of a packet destined for another competing UE **110** may have been after the acknowledgement time for the subsequent packet for given UE **110.** The base station outgoing rate for the given UE **110** when there is no competition may therefore be estimated as the difference between the noted acknowledgement time of the subsequent packet and the noted acknowledgement time of the certain packet divided by the difference between the respective noted sequence numbers. This rate may be indicative of reception conditions for given UE **110.** The rate may be compared to a threshold dependent on a minimum required rate for the given UE **110** (e.g. comprising a sum of the minimum rate per type of data packet recently noted for the given UE **110**). If the rate is less than the threshold, then it may be determined that based on a result of this comparison delaying should be adjusted, e.g. by affector **670** delaying one or more packet(s) destined for UE **110.** If the rate is already equal to or more than the threshold, then no delay adjustment may be necessary based on a result of this comparison (although may possibly be necessary based on a result of another comparison).

Additionally or alternatively, for instance, affector **670** e.g. delay evaluator **676** may estimate the average round trip time or a function thereof (e.g. round trip time less round trip time adjustment) for a plurality of user equipments **110** and determine that the average is steady. Delay evaluator **676** may then estimate that the outgoing rate from base station **130** to the plurality of UEs **110** may be approximately equal to the incoming rate to base station **130** for the plurality of UEs **110** which in turn may be approximately equal to the rate of forwarding and/or passing by affector **670** for the plurality of UEs **110.** For instance, if there is no differentiation between the various user equipments **110** in the plurality of user equipments **110** the passing by/forwarding rate may be determined based on noted passing by/forwarding times for packets destined for any of the plurality of user equipments **110.** Assuming the type(s) of data packets destined for any of these plurality of equipments have been noted, this rate may be compared to a threshold dependent on a minimum required rate for the plurality of UEs **110** (e.g. comprising a sum of the minimum rate per type of data packet recently noted for any of the plurality of UEs **110**). If the rate is less than the threshold, then it may be determined that based on a result of this comparison delaying should be adjusted, e.g. by delaying one or more packet(s) destined for any of the plurality of UEs **110** in affector **670.** If the rate is already equal to or more than the threshold, then no delay adjustment may be necessary based on a result of this comparison (although may possibly be necessary based on a result of another comparison). The plurality of user equipments **110** may or may not compete for service and/or may or may not be associated with one or more group(s) served by one or more wireless transmitters (s) of base station **130.**

Additionally or alternatively, for instance, affector **670** e.g. delay evaluator **676** may estimate a parameter indicative of base station queuing time in base station **130** (e.g. round trip time or adjusted round trip time) for any individual user equipment **110.** If it may be assumed that there is a time interval between evaluation times, meaning that the parameter may be estimated after an interval from the last estimation, delay evaluator **676** may compare the parameter to a threshold dependent on the length of the time interval. If the parameter is shorter than the threshold then affector **670** may determine to adjust delaying (e.g. by stopping delaying at least one packet destined for individual UE **110**) and/or may determine not to adjust delaying (e.g. not delaying) at least one packet destined for individual UE **110** based on a result of this comparison. The parameter being shorter than the threshold may be indicative of too short base station queuing time, where the definition of "too short" is not limited by the subject matter but may mean that that base station **130** may not be sufficiently occupied with servicing individual UE **110** and/or that power consumption may be too high. For instance, the adjustment may attempt to cause the parameter indicative of base station queuing time (e.g. e.g. round trip time or adjusted round trip time) to be at least equal to the length of the interval so that base station **110** may be sufficiently occupied with individual UE **110** and/or to improve power consumption. If the parameter is already equal to or longer than the threshold, then affector **670** may determine that stopping delaying and/or not delaying may not be necessary based on a result of this comparison (although may possibly be necessary based on a result of another comparison).

Additionally or alternatively, for instance, affector **670** e.g. delay evaluator **676** may estimate a parameter indicative of base station queuing time (e.g. average round trip time or average adjusted round trip time) for a plurality of user equipments **110.** If it may be assumed that there is a time interval between evaluation times, meaning that the parameter may be estimated after an interval from the last estimation, delay evaluator **676** may compare the parameter to a threshold dependent on the length of the time interval. If the parameter is shorter than the threshold, then affector **670** may determine to adjust delaying (e.g. by stopping delaying of at least one packet destined for any of the plurality of user equipments **110**) and/or may determine not to adjust delaying (e.g. not delaying) at least one packet destined for any of the plurality of user equipments **110** based on a result of this comparison. The parameter being shorter than the threshold may be indicative of too short base station queuing time, where the definition of "too short" is not limited by the subject matter but may mean that that base station **130** may not be sufficiently occupied with servicing the plurality of UEs **110** and/or that power consumption may be too high. For instance, the adjustment may attempt to cause the parameter indicative of base station queuing time (e.g. average round trip time or adjusted round trip time) to be at least equal to the length of the interval so that base station **110** may be sufficiently occupied with the plurality of UEs **110** and/or to improve power consumption. If the parameter is already equal to or longer than the threshold, then affector **670** may determine that stopping delaying and/or not delaying may not be necessary based on a result of this comparison (although may possibly be necessary based on a result of another comparison). The plurality of user equipments **110** may or may not compete for service and/or may or may not be associated with one or more group(s) served by one or more wireless transmitter(s) of base station **130.**

Additionally or alternatively, for instance, affector **670** e.g. delay evaluator **676** may estimate a plurality of parameters indicative of base station queuing time (e.g. round trip time or adjusted round trip time), each for one UE **110** in a plurality of user equipments **110.** If it may be assumed that there is a time interval between evaluation times, meaning that each of these parameters may be estimated after an interval from the last estimation, delay evaluator **676** may compare each of these parameters to a threshold dependent on the length of the time interval. If for a predetermined percentage of comparisons the parameter is shorter than the threshold, then affector **670** may determine to adjust delaying (e.g. by stopping delaying of at least one packet destined for any of the plurality of user equipments **110**) and/or may determine not to adjust delaying (e.g. not delaying) at least one packet destined for any of the plurality of user equipments **110** based on a result of this comparison. The parameter being shorter for a predetermined percentage of comparisons may be indicative of too short base station queuing time, where the definition of "too short" is not limited by the subject matter but may mean that base station **130** may not be sufficiently occupied with servicing the plurality of UEs **110** and/or that power consumption may be too high. For instance, the adjustment may attempt to cause for a predefined percentage of UEs **110** the respective parameter indicative of base station queuing time (e.g. round trip time or adjusted round trip time) to at least equal the length of the interval so that base station **110** may be sufficiently occupied with the plurality of UEs **110** and/or to improve power consumption. If, for the predefined percentage, the respective parameter is already equal or longer than the threshold, then affector **670** may determine that stopping delaying and/or not delaying may not be necessary based on a result of this comparison (although may possibly be necessary based on a result of another comparison). The plurality of user equipments **110** may or may not compete for service and/or may or may not be associated with one or more group(s) served by one or more wireless transmitters (s) of base station **130.**

Additionally or alternatively, for instance, affector **670** e.g. delay evaluator **676** may estimate a parameter indicative of base station queuing time (e.g. round trip time or adjusted round trip time) for any user equipment **110.** Delay evaluator **676** may compare this parameter to a threshold dependent on a maximum desired base station queuing time. If the parameter is longer than the threshold, then affector **670** may determine to adjust delaying (e.g. by delaying at least one packet for UE **110**) based on a result of this comparison. The parameter being longer than the threshold may be indicative of too long base station queuing time, where the definition of "too long" is not limited by the subject matter. For instance, the adjustment may attempt to cause the parameter indicative of base station queuing time (e.g. round trip time or adjusted round trip time) to not exceed the maximum desired base station queuing time. If the parameter is already shorter than or equal to the threshold, then delay adjustment may not be necessary based on result of this comparison (although may possibly be necessary, based on a result of another comparison).

Additionally or alternatively, for instance, affector **670** e.g. delay evaluator **676** may estimate a parameter indicative of base station queuing time (e.g. average round trip time or adjusted round trip time) for a plurality of user equipments **110.** Delay evaluator **676** may compare this parameter thereof to a threshold dependent on a maximum desired base station queuing time. If the parameter is longer than the threshold, then affector **670** may determine to adjust delaying (e.g. by delaying at least one packet for any of the plurality of UEs **110**). The parameter being longer than the threshold may be indicative of too long base station queuing time, where the definition of "too long" is not limited by the subject matter. For instance, the adjustment may attempt to cause the parameter indicative of base station queuing time (e.g. average round trip time or adjusted round trip time) to not exceed the maximum desired base station queuing time. If the parameter is already shorter than or equal to the threshold, then delay adjustment may not be necessary based on a result of this comparison (although may possibly be necessary based on a result of another comparison). The plurality of user equipments **110** may or may not compete for service and/or may or may not be associated with one or more group(s) served by one or more wireless transmitter(s) of base station **130.**

Additionally or alternatively, for instance, affector **670** e.g. delay evaluator **676** may estimate a plurality of parameters indicative of base station queuing time (e.g. round trip time or adjusted round trip time), each for one UE **110** in a plurality of user equipments **110.** Delay evaluator **676** may compare each of these parameters to a threshold dependent on a maximum desired base station queuing time. If for a predetermined percentage of comparisons the parameter is longer than the threshold, then affector **670** may determine to adjust delaying (e.g. by stopping delaying of at least one packet destined for any of the plurality of user equipments **110**) and/or not delaying at least one packet destined for any of the plurality of user equipments **110** based on a result of this comparison. The parameter being longer for a predetermined percentage of comparisons may be indicative of too long base station queuing time, where the definition of "too long " is not limited by the subject matter. For instance, the adjustment may attempt to cause for a predefined percentage of UEs **110** the respective parameter indicative of base station queuing time (e.g. round trip time or adjusted round trip time) to not exceed the maximum desired base station queuing time. If for the predefined percentage the respective parameter is already shorter than or equal to the maximum desired base station queuing time, then affector **670** may determine that stopping delaying and/or not delaying may not be necessary based on result of this comparison (although may possibly be necessary, based on a result of another comparison). The plurality of user equipments **110** may or may not compete for service and/or may or may not be associated with one or more group(s) served by one or more wireless transmitter(s) of base station **130.**

Depending on the number of parameter(s) which may be estimated, any of stages **730** to **765** may be performed one or more times. If performed a plurality of times, the adjustment variables, estimated parameters, and/or thresholds from different iterations may relate to the same user equipment(s) **110** (and/or the same plurality of user equipments **110**) and/or to different user equipment(s) **110** (and/or to different pluralities of user equipments **110**). If performed a plurality of times, then a final determination of delay adjustment may be made which may consider one or more of the various determinations in stage **765** for the respective comparisons and therefore the final determination of whether or not to adjust delaying may be at least partly based on at least one parameter estimated during at least one of the plurality of times.

If it is determined to adjust delaying (yes to stage **770**), then in the illustrated example, in stage **775** there may be an adjustment of the delaying by affector **170,** for instance delayer **678** and method **700** may then iterate to stage **715.** Stage **770** may be an example of stage **370.** Stage **775** may be an example of stage **375.** If not (no to stage **770**), then in the illustrated example method **700** may iterate directly to stage **715.**

For instance, in stage **775,** affector **760,** e.g. delayer **678,** may adjust delaying by delaying data packet(s) (e.g. by placing data packets in queue(s) **684** and/or dropping packet(s)), and/or by stopping delaying of data packet(s) (e.g. removing data packet(s) from queue(s) **684**), etc. Additionally or alternatively, delayer **678** may not adjust delaying by way of not delaying data packet(s) (e.g. not putting data packet(s) in queue(s) **684** nor dropping packet(s))). There may be any number and/or type of queue(s) **684.** The number and/or type of queues **684** may or may not be set based on the desired basis for prioritization. For instance, there may be separate queue(s) **684** for each UE **110,** or any queue **684** may include data packet(s) destined for one or more UEs **110;** and/or there may be separate queue(s) **684** for each data packet type or for each collection of data packet types, or any queue **684** may include data packet(s) of any type; etc.

Depending on the example, a determination in stage **770** and optionally a subsequent delay adjustment in stage **775** may or may not be applied uniformly to data packets and therefore may not necessarily affect the data packets uniformly. For example, a uniform determination to apply a delay adjustment may include delaying each data packet, delaying each data packet for a certain amount of time, stopping the delay of each data packet, and/or stopping the delay of each data packet after a certain amount of time has passed, etc. For example, a uniform determination not to apply a delay adjustment may include not delaying any data packet. For example, a non-uniform determination regarding delay adjustment may include a data packet prioritization scheme.

In examples where data packets may not be uniformly affected by a delay adjustment, the subject matter does not limit the prioritization scheme. However, for the sake of further illustration to the reader, some examples are now presented.

For example, in a prioritization scheme non-prioritized data packet(s) may be delayed while prioritized data packet(s) may not be delayed or may have delay thereof stopped before non-prioritized data packets.

Additionally or alternatively, for example, selection of data packet(s) in a prioritization scheme may be at least partly random, meaning that certain data packets may be randomly selected to be prioritized while others may be randomly selected to not be prioritized.

Additionally or alternatively, for example, selection of data packet(s) in a prioritization scheme may be at least partly based on time, for instance with earlier (or later) data packets selected to be prioritized and later (or earlier) data packets selected to be non-prioritized.

Additionally or alternatively, for example selection of data packet(s) in a prioritization scheme may be at least partly based on one or more data packet characteristic(s). The subject matter does not limit the prioritization based on packet characteristic(s). However, for the sake of further illustration to the reader, some instances are now presented.

For instance, consider the characteristic of data packet type. Assume that it is determined that a particular UE **110** may not properly receive all data packets destined for particular UE **110** e.g. due to reception conditions even when disregarding other competing UEs **110.** Possibly, the base station outgoing rate for particular UE **110** may have been estimated while no other competing UEs **110** were being serviced, as described above. If the base station outgoing rate to this particular UE **110** is estimated to be below the minimum rate required for a certain type of data packet(s) destined for this UE **110,** then it may be determined to delay this type of data. If, however, the outgoing rate is not below any minimum rate required for any type of data packet destined for this UE **110** but is below the sum of minimum rates required for all types of data packets destined for UE **110,** then it may be determined, for instance to prioritize the data packets of type(s) for which a high quality of user experience depends on a constant rate (e.g. streaming, etc.), and to delay data packet(s) of type(s) for which a high quality of user experience may not necessarily depend on a constant rate (e.g. downloading and/or browsing, etc.).

Additionally or alternatively, for instance, consider the characteristic(s) of data packet type and/or UE **110** identifier. Assume that it is determined that not all of a plurality of UE's **110** may properly receive all data packets destined for these UEs **110.** In this instance, prioritization may be based on UE **110** and/or type of data. For example, assume the first priority is to prioritize data packets of type(s) for which a high quality of user experience depends on a constant rate (e.g. streaming, etc). Possibly, the base station outgoing rate for the plurality of UEs **110** may have been estimated as described above. If the base station outgoing rate from base station **130** to this plurality of UEs **110** is estimated to be below the minimum rate required to provide a certain type of data packets for which a high quality of experience depends on a constant rate to even one UE **110** in this plurality which is supposed to be provided with this type of data, then it may be determined to delay this type, even though this type of data is prioritized. If however the outgoing rate to this plurality is at least equal to the minimum rate required to provide a certain type of data packets for which for which a high quality of user experience depends on a constant rate to one or more UE(s) **110** in this plurality which is/are supposed to be provided with this type of data, but not to all UEs **110** in this plurality which are supposed to be provided with this type of data, then based on prioritization of users, this type of data may be delayed for certain user equipment(s) **110** but not for other user equipment(s) **110**(s) in the plurality. If however, the outgoing rate to this plurality is at least equal to the minimum rate required to provide a certain type of data packets for which a high quality of user experience depends on a constant rate, to all UEs **110** in this plurality which are supposed to receive this type of data, then this type of data may be prioritized, and other data packet(s) of type(s) for which a high quality of user experience may not necessarily depend on a constant rate (e.g. downloading, and/or browsing, etc) may be delayed.

Additionally or alternatively, for instance, consider the characteristic of data packet type. Assume that it is determined that the queuing time in base station **130** is too long or too short (e.g. when compared to a threshold) for a particular UE **110.** (In order to simplify the discussion disregard any effect from other UEs **110** and/or reception conditions). If the first priority is to prioritize data packets of type(s) for which a high quality of user experience depends on a constant rate (e.g. streaming, etc), then if the base station queuing time is too long and it is desired to reduce the queuing time, data packet(s) of other type(s) may be more likely to be delayed and/or may be less likely to have delay stopped. However, if the base station queuing time is too short and it is desired to increase the queuing time then data packet(s) of type(s) for which a good quality of user experience depends on a constant rate may be less likely to be delayed and/or more likely to have delay stopped.

Additionally or alternatively, for instance, consider the characteristic of UE identifier. Assume that it is determined the queuing time in base station **130** for a plurality of UEs **110** is too long or too short (e.g. when compared to a threshold). If there is no difference in types of data packets or collections of data packet types (or for simplicity's sake disregarding any differences), but there is a difference in prioritization for different users, then if the base station queuing time is too long (e.g. compared to a threshold) and it is desired to reduce the queuing time, data packet(s) for user equipments **110** associated with non-prioritized user(s) may be more likely to be delayed and/or less likely to have delay stopped. However, if the base station queuing time is too short and it is desired to increase the queuing time then data packet(s) for user equipments **110** associated with prioritized user(s) may be less likely to be delayed and/or more likely to have delay stopped.

It is noted that stages **715** to **725** may have continued to be performed as data packets are handled while stages **726** to **775** were being performed.

In some examples, rather than iterating to stage **715** after stage **770** or **715,** method **700** may iterate to any other stage in method **700** or may end. If ended, or between iterations, it may still be possible that one or more stage(s) of method **700** may be performed, for other purpose(s) and/or to maintain routine for affector **670.**

In some instances, the time period for a particular data packet to travel from PDN **190** to UE **110** may be reduced due to the delay of one or more other packet(s) in method **700.**

Additionally or alternatively, in some instances, method **700** may result in an improved quality of user experience for at least one user.

Alternatively to the example illustrated in **Fig 7****,** stages which are shown as being executed sequentially may in some other examples be executed in parallel, and/or stages shown as being executed in parallel may in some other examples be executed sequentially. Alternatively to any of the example illustrated in **Fig. 7****,** method **700** may in some other examples include more, fewer and/or different stages than illustrated. Alternatively to the example illustrated in **Fig. 7****,** stages may in some other examples be executed in a different order than illustrated.

Although to ease the understanding of the reader, systems **470** and **670** have been described separately, in some examples, there may be a combined system which may include some or all of the functionality and/or one, some or all of the modules from system **470** and some or all of the functionality and/or one, some or all of the modules from system **670.** Such a combined system may be an example of supervisor system **170.** Such a combined system may include any combination of software, hardware and/or firmware. For example such a combined system or any part thereof may include a computer. The subject matter does not limit the location(s) of system **470, 670** or a combination thereof, nor does the subject matter limit whether or not module(s) of the system are concentrated in one location or dispersed, but optionally at least part of the system may be located in a location between one or more PDN(s) **190** and one or more base station(s) **130,** and/or optionally at least part of the system may be in the same location as one or more base station(s) **130** but at least logically separate from base station(s) **130.** Additionally or alternatively, although to ease the understanding of the reader, methods **500** and **700** have been described separately, in some examples there may be a combined method which may include one, some or all of the stages from method **500** and one, some or all of the stages from method **700.** Such a combined method may be an example of method **300.**

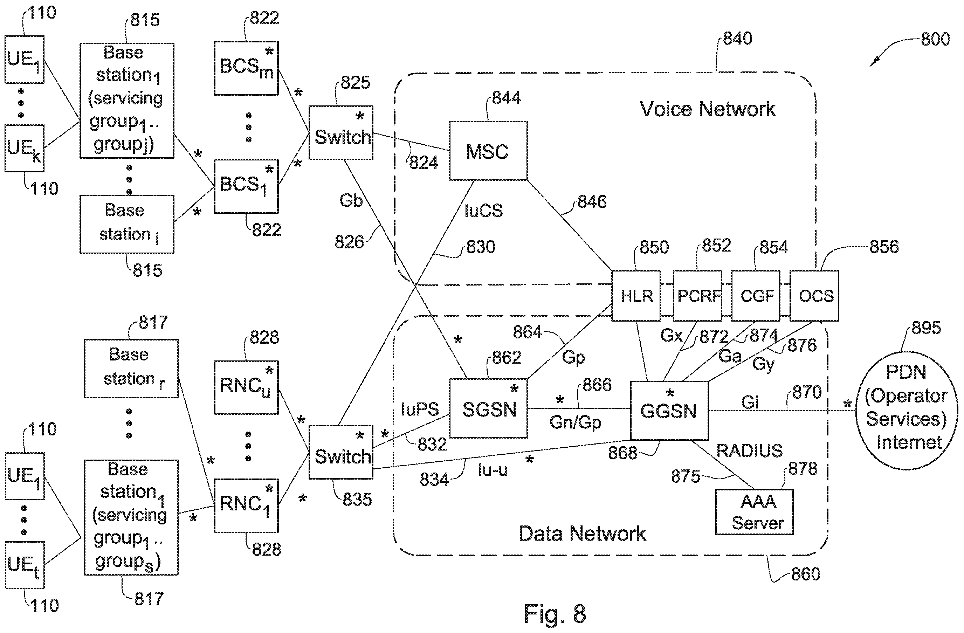

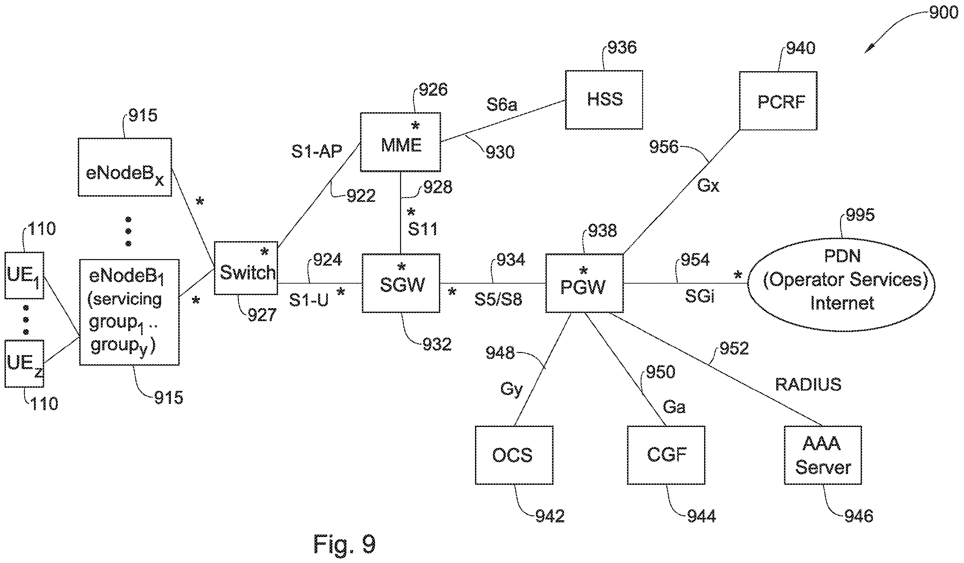

Referring again to **Fig. 1****,** for simplicity of illustration and description, there may be other element(s) which may be included in wireless network **100,** depending on the architecture of wireless network **100,** which are not illustrated in nor described with reference to **Fig. 1****.** For instance, there may be router(s), switch(es), and/or any other element(s) which are not illustrated in **Fig. 1****.** (Some examples of such element(s) may be described and illustrated with reference to **Fig 8** and **9** below.) Depending on the example, any of the systems within the scope of the current subject matter (e.g. system **170,** system **470,** system **670,** a combination system, etc) or any part thereof may be a standalone element and/or may be integrated with any of these other element(s), if existing in network **100,** such as with any router(s), switch(es), and/or any other suitable element(s). If any such system or any part thereof is integrated with other element(s), the integrated system may, for instance, include functionality of that system or part thereof and/or functionality of the other element(s). Additionally or alternatively for instance, module(s) in the integrated system may include any module(s) within the scope of the current subject matter (e.g. shown in Fig. **2****,** **4****,** and/or **6,** etc). Additionally or alternatively, for instance, the integrated system may be configured to perform part or all of any method within the scope of the current subject matter (e.g. method **300, 500,** and/or **700,** etc). Additionally or alternatively for instance, such an integrated system may include any combination of software, hardware and/or firmware. For example such an integrated system or any part thereof may include a computer. Additionally or alternatively, a system not integrated with such element(s), an integrated system, or any part thereof may or may not be integrated with base station **130,** but in any event may be logically separate from base station **130.** If base station **130** is so integrated, a system which includes base station **130** and also includes a system not integrated with such element(s), an integrated system, or any part thereof may for instance, include any combination of software, hardware and/or firmware. For example such a system (in which base station **130** is integrated) or any part thereof may include a computer. Additionally or alternatively for instance, module(s) in such a system may include any module(s) within the scope of the current subject matter (e.g. shown in Fig. **2****,** **4****,** and/or **6,** etc). Additionally or alternatively for instance, such a system may be configured to perform part or all of any method within the scope of the current subject matter (e.g. method **300, 500,** and/or **700,** etc).

Although the subject matter does not impose limitations on the architecture of wireless network **100,** for the sake of further illustration **Figs. 8** and **9** show some examples of architecture of wireless network **100.**

**Fig. 8** is a block diagram of an example of a mobile network **800** with a core network of UMTS/GSM architecture, in accordance with the presently disclosed subject matter.

Network **800** may be an example of network **100** discussed above.

In the illustrated example, mobile network **800** may include one or more base station controllers (BSCs) **822** and/or one or more radio network controllers (RNCs) **820.** For simplicity of illustration *m* (*m* ≥1) BSC(s) **822** and *u* (*u* ≥1) RNC(s) **820** are illustrated in **Fig. 8** and functionality is described with reference to a first one of each. BSC **822** may be used in GSM Enhanced Data rates for GSM Evolution (EDGE) architecture as well as in combined UMTS/GSM architecture. RNC **528** may be used in UMTS architecture.

In the illustrated example, an interface **824** may interface between BSC **522** and voice network **840** and/or a Gb interface **826** may interface between BSC **822** and data network **860.** An IuCS interface **830** may interface between RNC **828** and voice network **840** and/or an IuPS interface **832** and/or an Iu-u interface **834** may interface between RNC **828** and data network **860.**

In the illustrated example, data network **860** and optionally voice network **540** may be included in network **800.** Although for simplicity of illustration only one element of each type in networks **860** and **840** is illustrated in **Fig. 8****,** it is possible that a different implementation may include multiple elements of any given type.

Optionally mobile network **800** may include any of the following modules: Home Location Registrar (HLR) **850,** Policy and charging rules function (PCRF) **852,** Charging Gateway Function (CGF) **854,** and/or Online Charging System (OCS) **856.** Although for simplicity of illustration only one element of each of these types is illustrated in **Fig. 8****,** it is possible that a different implementation may include multiple elements of any given type.

In the illustrated example, voice network **840** (when included), may include a mobile switching center (MSC) **844.** An interface **846** may interface between MSC **844** and HLR **850.** In the illustrated example, data network **860** may include a Serving GPRS Node (SGSN), a Gateway GPRS Support Node (GGSN), and optionally an Authentication, Authorization, and Accounting (AAA) server **875.** A Gn/Gp interface **866** may interface between SGSN **862** and GGSN **866.** A Gr interface **864** may interface between SGSN **862** and HLR **850.** A Gx interface **872** may interface between PCRF **852** and GGSN **868.** A Ga interface **874** may interface between CGF **854** and GGSN **868.** A Gy interface **876** may interface between OCS **856** and GGSN **868.** A Remote Authentication Dial In User Service (RADIUS) protocol **875** may be used as a protocol between GGSN **868** and AAA server **878.**

In the illustrated example, mobile network **800** may also include a PDN **895** (an example of PDN **190**). A Gi interface **870** may interface between data network **860** and PDN **895.** Although for simplicity of illustration only one PDN **895** is illustrated in **Fig. 8****,** it is possible that a different implementation may include multiple PDNs **895.**

In the illustrated example, network **800** may optionally include one or more switches to switch between controllers. For simplicity of illustration, two switches **825** and **835** are shown which switch between BSCs **822** and between RNCs **828** respectively. Each BSC **822** may control one or more base station(s) **815,** also referred to as radio base station(s) or base transceiver station(s). For instance, for simplicity of illustration *i* (*i* ≥1) base station(s) **815** are shown and functionality is described with reference to a first base station **815.** Each RNC **828** may control one or more base station(s) **817,** also referred to as NodeB(s). For instance, for simplicity of illustration *r* (*r* ≥1) base station(s) **817** are shown and functionality is described with reference to a first base station **817.** Base station(s) **815** and/or base station(s) **817** may be example(s) of base station **130.** Each base station **815** may service one or more group(s) served by one or more wireless transmitter(s) and thereby service one or more UE(s) **110.** For instance a first base station **815** is shown servicing *j* group(s) (*j*≥1) and therefore servicing *k* UE(s) **110** (*k*≥1). For instance a first base station **817** is shown servicing s group(s) (*s*≥1) and therefore servicing t UE(s) **110** (*t≥*1).

Asterisks ("*") in **Fig. 8** illustrate possible locations of supervisor **170** or at least a part thereof. Depending on the example, there may be one or more supervisor module(s) **170** in mobile network **800.** For instance, a particular supervisor **170** or at least a part thereof may be located between a particular base station **815** and respective BSC **822** thereof, between a particular base station **817** and respective RNC **828** thereof, in any BSC **822,** in any RNC **828,** between any RNC **828** and respective switch thereof **835,** between any BSC **822** and respective switch thereof **825,** in any switch **825** and/or **835,** between any switch **835** and SGSN **862,** between any switch **825** and SGSN **862,** between any switch **835** and GGSN **868,** between SSGN **862** and GGSN **868,** between GGSN **568** and PDN **595,** in SGSN **862,** and/or in GGSN **868,** etc. Any particular supervisor **170** or any part thereof may be configured to adopt one or more protocols depending on the location of supervisor module **170** or any part thereof in network **800.**

**Fig. 9** is a block diagram of an example of a mobile network including a core network of LTE architecture, in accordance with the presently disclosed subject matter.

Mobile network **900** may be an example of network **100** discussed above.

In the illustrated example, mobile network **900** may include a Serving Gateway (SGW) **932,** a Mobility Management Entity (MME) **926,** a PDN Gateway (PGW) **938** and one or more base station(s) **915,** also referred to as eNodeB(s). For instance, for simplicity of illustration *x* (*x* ≥1) base station(s) **915** are shown and functionality is described with reference to a first base station **915.** Base station **915** may be an example of base station **130.** An S1-U interface **924** may interface between base station **915** and SGW **932.** An S1-AP interface **922** may interface between base station **915** and MME **926.** An S11 interface **928** may interface between MME **926** and SGW **932.** An S5/S8 interface **934** may interface between SGW **932** and PGW **938.**

Optionally mobile network **900** may also include any of the following: a Home Subscriber Server (HSS) **936,** a PCRF **940,** an OCS **942,** a CGF **944,** and/or an AAA server **946.** An S6a interface **930** may interface between MME **926** and HSS **936.** A Gy interface **948** may interface between OCS **942** and PGW **938.** A Ga interface **950** may interface between CGF **944** and PGW **938.** A Gx interface **956** may interface between PCRF **940** and PGW **938.** A RADIUS protocol **952** may be used as a protocol between PGW **938** and AAA server **946.**

Although for simplicity of illustration only one element of type **926, 927, 932, 936, 938, 950, 942, 944,** and **946** in network **900** is illustrated in **Fig. 9****,** it is possible that a different implementation may include multiple elements of any given type.

In the illustrated example, mobile network **900** may also include a PDN **995** (an example of PDN **190**). An sGi interface **954** may interface between PGW **938** and PDN **995.** Although for simplicity of illustration only one PDN **995** is illustrated in **Fig. 9****,** it is possible that a different implementation may include multiple PDNs **995.**

In the illustrated example, network **800** may optionally include one or more switches to switch between base stations **915.** For simplicity of illustration, one switch **927** is shown. Network **900** may also includes one or more user equipments(s) **110.** Each base station **915** may service one or more group(s) served by one or more wireless transmitter(s) and thereby service one or more UE(s) **110.** For instance a first base station **915** is shown servicing y group(s) (*y*≥1) and therefore servicing z UE(s) (*z*≥1).

Asterisks ("*") in **Fig 9** illustrate possible locations of supervisor **170** or at least a part thereof. Depending on the example, there may be one or more supervisor module(s) **170** in mobile network **900.** For instance, a particular supervisor module **170** or at least a part thereof may be located between base station **915** and switch **927,** in switch **927,** between switch **927** and MME **926,** between switch **927** and SGW **932,** between MME **926** and SGW **932,** between SGW **932** and PGW **938,** between PGW **938** and PDN **995,** in MME **926,** in SGW **932,** and/or in PGW **938,** etc. Any particular supervisor **170** or any part thereof may be configured to adopt one or more protocols depending on the location of supervisor **170** or any part thereof in network **900.**

It will be understood that the subject matter contemplates, for example, a computer program being readable by a computer for executing a method or part of a method disclosed herein. Further contemplated by the subject matter, for example, is a computer-readable memory tangibly embodying program code readable by a computer for executing a method or part of a method disclosed herein.

While examples of the subject matter have been shown and described, the subject matter is not thus limited. Numerous modifications, changes and improvements within the scope of the subject matter will now occur to the reader.

## Claims

1. A method by a supervisor computer (170) of supervising data in a wireless network, comprising:
intercepting packets en route between a base station (130) and a packet data network (190),
noting times associated with the intercepted data packets;
identifying in the intercepted packets, one or more characteristics of the packet;
at least partly based on one or more of said noted times and the identified one or more characteristics, evaluating the service provided by the base station (130);
at least partly based on a result of said evaluating, determining whether or not at least one action to improve a quality of user experience provided by the base station (130) should be performed; and
if determined that any action should be performed, performing at least one action to improve a quality of user experience provided by the base station (130),
**characterized in that**:
evaluating the service provided by the base station (130) comprises:
approximating an incoming data rate to the base station (130) for packets directed to a plurality of user equipments UEs (110), based on the noted times associated with the intercepted data packets;
estimating an outgoing data rate from the base station (130) to the plurality of UEs (110), based on the intercepted packets;
estimating for each of the UEs (110), at least one parameter indicative of a fullness of at least one queue in the base station (130) for packets directed to the UE (1 10), based on the estimated incoming data rates and the outgoing data rates; and
comparing the estimated at least one parameter indicative of the fullness to one or more thresholds.

2. The method of claim 1, wherein estimating the at least one parameter indicative of a fullness of at least one queue in the base station (130) comprises adjusting the at least one parameter responsive to an adjustment parameter estimating a minimum time between when a certain data packet traveling toward the UE is intercepted and when a corresponding acknowledgement is intercepted.

3. The method of claims 1 or claim 2, wherein estimating an outgoing data rate from the base station (130) to the plurality of UEs (110) comprises estimating the outgoing data rate responsive to acknowledgements received from the UEs.

4. The method of any of the preceding claims, wherein the one or more thresholds include different thresholds for different UEs (110).

5. The method of any of the preceding claims, wherein the one or more thresholds vary over time.

6. The method of any of the preceding claims, wherein estimating the outgoing data rate from the base station (130) comprises estimating a difference between two times noted for two different acknowledgement packets, divided by a difference between noted sequence numbers of the two packets.

7. The method of any of claims 1-5, wherein estimating the outgoing data rate from the base station comprises estimating a rate of intercepted data packets on their way to the base station, destined for one or more particular UEs (110), when a function of a round trip time to the UE is steady.

8. The method of any of the preceding claims, wherein at least one of said at least one action is performed in order to reduce the fullness of at least one queue in the base station (130).

9. A computer supervisor apparatus (170) for supervising data in a wireless network, comprising:
a noter (274) configured to intercept data packets en route between a packet data network and a base station (130), to note times associated with the intercepted data packets and to identify in the intercepted packets, one or more characteristics of a corresponding stream of the packet;
an evaluator (276) configured, at least partly based on one or more of said noted times and the identified one or more characteristics, to evaluate the service provided by the base station (130), and configured, at least partly based on a result of said evaluating, to determine whether or not at least one action to improve a quality of user experience provided by the base station (130) should be performed; and
an action performer delayer (278) configured, if determined that any action should be performed, to perform at least one action to improve a quality of user experience provided by the base station (130),
**characterized in that**:
the evaluator (276) is configured to evaluate the service provided by the base station (130) by approximating an incoming data rate to the base station (130) for packets directed to a plurality of user equipments UEs (110), based on the noted times associated with the intercepted data packets; estimating an outgoing data rate from the base station (130) to the plurality of UEs (110), based on the intercepted packets, estimating for each of the UEs (110), at least one parameter indicative of a fullness of at least one queue in the base station (130) for packets directed to the UE (110), based on the estimated incoming data rates and the outgoing data rates; and comparing the estimated at least one parameter indicative of the fullness to one or more thresholds.

10. The system of claim 9, wherein the evaluator (276) estimates the outgoing data rate from the base station (130) to the plurality of UEs (110) responsive to acknowledgements received from the UEs.

11. The system of claim 9 or claim 10, wherein the evaluator (276) estimates the outgoing data rate from the base station (130) as a difference between two times noted for two different acknowledgement packets, divided by a difference between noted sequence numbers of the two packets.

12. The system of any of claims 9-11, wherein the evaluator (276) adjusts the at least one parameter responsive to an adjustment parameter estimating a minimum time between when a certain data packet traveling toward the UE is intercepted and when a corresponding acknowledgement is intercepted.

13. The system of any of claims 9-12, wherein at least one of said at least one action is performed in order to reduce the fullness of at least one queue in the base station.

14. A computer program product comprising a computer useable medium having computer readable code embodied therein for supervising data in a wireless network, the computer program product comprising:
computer readable program code for causing a computer to intercept data packets en route between a packet data network and a base station (130), to note times associated with the intercepted data packets and to identify in the intercepted packets, one or more characteristics of a corresponding stream of the packet;
computer readable program code for causing a computer, at least partly based on one or more of said noted times and the identified one or more characteristics, to evaluate the service provided by the base station (130);
computer readable program code for causing a computer, at least partly based on a result of said evaluating, to determine whether or not at least one action to improve a quality of user experience provided by the base station (130) should be performed; and
computer readable program code for causing a computer, if determined that any action should be performed, to perform at least one action to improve a quality of user experience provided by the base station (130),
**characterized in that**:
the evaluating comprises approximating an incoming data rate to the base station (130) for packets directed to a plurality of user equipments UEs (110), based on the noted times associated with the intercepted data packets; estimating an outgoing data rate from the base station (130) to the plurality of UEs (110), based on the intercepted packets, estimating for each of the UEs (110), at least one parameter indicative of a fullness of at least one queue in the base station (130) for packets directed to the UE (110), based on the estimated incoming data rates and the outgoing data rates; and comparing the estimated at least one parameter indicative of the fullness to one or more thresholds.

15. The computer program product of claim 14, wherein at least one of said at least one action is performed in order to reduce the fullness of at least one queue in the base station (130).

## Patentansprüche

1. Verfahren, durch einen Überwachercomputer (170), zum Überwachen von Daten in einem drahtlosen Netzwerk, umfassend:
Abfangen von Paketen auf dem Weg zwischen einer Basisstation (130) und einem Paketdatennetzwerk (190),
Vermerken von Zeiten, die mit den abgefangenen Datenpaketen assoziiert sind;
Identifizieren einer oder mehrerer Eigenschaften des Pakets in den abgefangenen Paketen;
mindestens teilweise auf der Basis einer oder mehrerer der vermerkten Zeiten und der identifizierten einen oder mehreren Eigenschaften, Bewerten des von der Basisstation (130) bereitgestellten Dienstes;
mindestens teilweise auf der Basis eines Ergebnisses des Bewertens, Bestimmen, ob mindestens eine Aktion zum Verbessern einer Qualität der User Experience, die von der Basisstation (130) bereitgestellt wird, durchgeführt werden sollte oder nicht; und
falls bestimmt wird, dass irgendeine Aktion durchgeführt werden sollte, Durchführen mindestens einer Aktion zum Verbessern einer Qualität der User Experience, die von der Basisstation (130) bereitgestellt wird,
**dadurch gekennzeichnet, dass**:
das Bewerten des von der Basisstation (130) bereitgestellten Dienstes Folgendes umfasst:
Approximieren einer Eingangsdatenrate zu der Basisstation (130) für Pakete, die an eine Vielzahl von Benutzergeräten, UEs = User Equipments, (110) gerichtet sind, auf der Basis der mit den abgefangenen Datenpaketen assoziierten vermerkten Zeiten;
Schätzen einer Ausgangsdatenrate von der Basisstation (130) zu der Vielzahl von UEs (110) auf der Basis der abgefangenen Pakete;
Schätzen, für jedes der UEs (110), mindestens eines Parameters, der eine Vollheit mindestens einer Warteschlange in der Basisstation (130) angibt, für an das UE (110) gerichtete Pakete, auf der Basis der geschätzten Eingangsdatenraten und der Ausgangsdatenraten; und
Vergleichen des geschätzten mindestens einen Parameters, der die Vollheit angibt, mit einem oder mehreren Schwellenwerten.

2. Verfahren nach Anspruch 1, wobei das Schätzen des mindestens einen Parameters, der eine Vollheit mindestens einer Warteschlange in der Basisstation (130) angibt, Folgendes umfasst: das Anpassen des mindestens einen Parameters als Reaktion auf einen Anpassungsparameter, der eine Mindestzeit zwischen dem Zeitpunkt, wenn ein bestimmtes Datenpaket, das sich in Richtung des UE bewegt, abgefangen wird, und dem Zeitpunkt, wenn eine entsprechende Bestätigung abgefangen wird, schätzt.

3. Verfahren nach Anspruch 1 oder Anspruch 2, wobei das Schätzen einer Ausgangsdatenrate von der Basisstation (130) zu der Vielzahl von UEs (110) das Schätzen der Ausgangsdatenrate als Reaktion auf von den UEs empfangene Bestätigungen umfasst.

4. Verfahren nach einem der vorangehenden Ansprüche, wobei der eine oder die mehreren Schwellenwerte unterschiedliche Schwellenwerte für unterschiedliche UEs (110) beinhalten.

5. Verfahren nach einem der vorangehenden Ansprüche, wobei der eine oder die mehreren Schwellenwerte im Laufe der Zeit variieren.

6. Verfahren nach einem der vorangehenden Ansprüche, wobei das Schätzen der Ausgangsdatenrate von der Basisstation (130) Folgendes umfasst: das Schätzen einer Differenz zwischen zwei für zwei unterschiedliche Bestätigungspakete vermerkten Zeiten, geteilt durch eine Differenz zwischen vermerkten Sequenznummern der zwei Pakete.

7. Verfahren nach einem der Ansprüche 1-5, wobei das Schätzen der Ausgangsdatenrate von der Basisstation Folgendes umfasst: das Schätzen einer Rate abgefangener Datenpakete auf ihrem Weg zu der Basisstation, die für ein oder mehrere spezielle UEs (110) vorgesehen sind, wenn eine Funktion einer Umlaufzeit zu dem UE konstant ist.

8. Verfahren nach einem der vorangehenden Ansprüche, wobei mindestens eine der mindestens einen Aktion durchgeführt wird, um die Vollheit mindestens einer Warteschlange in der Basisstation (130) zu reduzieren.

9. Computerüberwachervorrichtung (170) zum Überwachen von Daten in einem drahtlosen Netzwerk, umfassend:
einen Vermerker (274), der für Folgendes konfiguriert ist: Abfangen von Datenpaketen auf dem Weg zwischen einem Paketdatennetzwerk und einer Basisstation (130),
Vermerken von Zeiten, die mit den abgefangenen Datenpaketen assoziiert sind, und Identifizieren einer oder mehrerer Eigenschaften eines entsprechenden Stroms des Pakets in den abgefangenen Paketen;
einen Bewerter (276), der für Folgendes konfiguriert ist: mindestens teilweise auf der Basis einer oder mehrerer der vermerkten Zeiten und der identifizierten einen oder mehreren Eigenschaften, Bewerten des von der Basisstation (130) bereitgestellten Dienstes, und für Folgendes konfiguriert ist: mindestens teilweise auf der Basis eines Ergebnisses des Bewertens, Bestimmen, ob mindestens eine Aktion zum Verbessern einer Qualität der User Experience, die von der Basisstation (130) bereitgestellt wird, durchgeführt werden sollte oder nicht; und
einen Aktionsdurchführerverzögerer (278), der für Folgendes konfiguriert ist: falls bestimmt wird, dass irgendeine Aktion durchgeführt werden sollte, Durchführen mindestens einer Aktion zum Verbessern einer Qualität der User Experience, die von der Basisstation (130) bereitgestellt wird,
**dadurch gekennzeichnet, dass**:
der Bewerter (276) für Folgendes konfiguriert ist: Bewerten des von der Basisstation (130) bereitgestellten Dienstes durch das Approximieren einer Eingangsdatenrate zu der Basisstation (130) für Pakete, die an eine Vielzahl von Benutzergeräten, UEs, (110) gerichtet sind, auf der Basis der mit den abgefangenen Datenpaketen assoziierten vermerkten Zeiten;
Schätzen einer Ausgangsdatenrate von der Basisstation (130) zu der Vielzahl von UEs (110) auf der Basis der abgefangenen Pakete, Schätzen, für jedes der UEs (110), mindestens eines Parameters, der eine Vollheit mindestens einer Warteschlange in der Basisstation (130) angibt, für an das UE (110) gerichtete Pakete, auf der Basis der geschätzten Eingangsdatenraten und der Ausgangsdatenraten; und Vergleichen des geschätzten mindestens einen Parameters, der die Vollheit angibt, mit einem oder mehreren Schwellenwerten.

10. System nach Anspruch 9, wobei der Bewerter (276) die Ausgangsdatenrate von der Basisstation (130) zu der Vielzahl von UEs (110) als Reaktion auf von den UEs empfangene Bestätigungen schätzt.

11. System nach Anspruch 9 oder Anspruch 10, wobei der Bewerter (276) die Ausgangsdatenrate von der Basisstation (130) als eine Differenz zwischen zwei für zwei unterschiedliche Bestätigungspakete vermerkten Zeiten, geteilt durch eine Differenz zwischen vermerkten Sequenznummern der zwei Pakete schätzt.

12. System nach einem der Ansprüche 9-11, wobei der Bewerter (276) den mindestens einen Parameter als Reaktion auf einen Anpassungsparameter, der eine Mindestzeit zwischen dem Zeitpunkt, wenn ein bestimmtes Datenpaket, das sich in Richtung des UE bewegt, abgefangen wird, und dem Zeitpunkt, wenn eine entsprechende Bestätigung abgefangen wird, schätzt, anpasst.

13. System nach einem der Ansprüche 9-12, wobei mindestens eine der mindestens einen Aktion durchgeführt wird, um die Vollheit mindestens einer Warteschlange in der Basisstation zu reduzieren.

14. Computerprogrammprodukt, umfassend ein computernutzbares Medium mit darin enthaltenem computerlesbarem Code zum Überwachen von Daten in einem drahtlosen Netzwerk, wobei das Computerprogrammprodukt Folgendes umfasst:
computerlesbaren Programmcode, um einen Computer zu Folgendem zu veranlassen:
Abfangen von Datenpaketen auf dem Weg zwischen einem Paketdatennetzwerk und einer Basisstation (130) zum Vermerken von Zeiten, die mit den abgefangenen Datenpaketen assoziiert sind, und zum Identifizieren einer oder mehrerer Eigenschaften eines entsprechenden Stroms des Pakets in den abgefangenen Paketen;
computerlesbaren Programmcode, um einen Computer zu Folgendem zu veranlassen:
mindestens teilweise auf der Basis einer oder mehrerer der vermerkten Zeiten und der identifizierten einen oder mehreren Eigenschaften, Bewerten des von der Basisstation (130) bereitgestellten Dienstes;
computerlesbaren Programmcode, um einen Computer zu Folgendem zu veranlassen:
mindestens teilweise auf der Basis eines Ergebnisses des Bewertens, Bestimmen, ob mindestens eine Aktion zum Verbessern einer Qualität der User Experience, die von der Basisstation (130) bereitgestellt wird, durchgeführt werden sollte oder nicht; und
computerlesbaren Programmcode, um einen Computer zu Folgendem zu veranlassen:
falls bestimmt wird, dass irgendeine Aktion durchgeführt werden sollte, Durchführen mindestens einer Aktion zum Verbessern einer Qualität der User Experience, die von der Basisstation (130) bereitgestellt wird,
**dadurch gekennzeichnet, dass**:
das Bewerten Folgendes umfasst: Approximieren einer Eingangsdatenrate zu der Basisstation (130) für Pakete, die an eine Vielzahl von Benutzergeräten, UEs, (110) gerichtet sind, auf der Basis der mit den abgefangenen Datenpaketen assoziierten vermerkten Zeiten;
Schätzen einer Ausgangsdatenrate von der Basisstation (130) zu der Vielzahl von UEs (110) auf der Basis der abgefangenen Pakete, Schätzen, für jedes der UEs (110), mindestens eines Parameters, der eine Vollheit mindestens einer Warteschlange in der Basisstation (130) angibt, für an das UE (110) gerichtete Pakete, auf der Basis der geschätzten Eingangsdatenraten und der Ausgangsdatenraten; und Vergleichen des geschätzten mindestens einen Parameters, der die Vollheit angibt, mit einem oder mehreren Schwellenwerten.

15. Computerprogramprodukt nach Anspruch 14, wobei mindestens eine der mindestens einen Aktion durchgeführt wird, um die Vollheit mindestens einer Warteschlange in der Basisstation (130) zu reduzieren.

## Revendications

1. Un procédé par un ordinateur superviseur (170) de supervision de données dans un réseau sans fil, comprenant :
l'interception de paquets en chemin entre une station de base (130) et un réseau de données en mode paquets (190),
la notation de temps associés aux paquets de données interceptés, l'identification, dans les paquets interceptés, d'une ou de plusieurs caractéristiques du paquet,
au moins partiellement en fonction d'un ou de plusieurs éléments parmi lesdits temps notés et les une ou plusieurs caractéristiques identifiées, l'évaluation du service fourni par la station de base (130),
au moins partiellement en fonction d'un résultat de ladite évaluation, la détermination si ou non au moins une action destinée à améliorer une qualité d'une expérience utilisateur fournie par la station de base (130) devrait être exécutée, et
s'il est déterminé qu'une action quelconque devrait être exécutée, l'exécution d'au moins une action destinée à améliorer une qualité d'une expérience utilisateur fournie par la station de base (130),
**caractérisé en ce que** :
l'évaluation du service fourni par la station de base (130) comprend :
l'approximation d'un débit de données entrant vers la station de base (130) pour des paquets dirigés vers une pluralité d'équipements d'utilisateur, UE (110), en fonction des temps notés associés aux paquets de données interceptés,
l'estimation d'un débit de données sortant de la station de base (130) vers la pluralité d'UE (110) en fonction des paquets interceptés,
l'estimation, pour chacun des UE (110), d'au moins un paramètre indicatif d'un degré de remplissage d'au moins une file d'attente dans la station de base (130) pour des paquets dirigés vers l'UE (110) en fonction des débits de données entrants estimés et des débits de données sortants, et
la comparaison du au moins un paramètre estimé indicatif du degré de remplissage à un ou plusieurs seuils.

2. Le procédé selon la Revendication 1, où l'estimation du au moins un paramètre indicatif d'un degré de remplissage d'au moins une file d'attente dans la station de base (130) comprend l'ajustement du au moins un paramètre en réponse à un paramètre d'ajustement estimant un temps minimum entre le moment où un paquet de données donné circulant vers l'UE est intercepté et le moment où un accusé de réception correspondant est intercepté.

3. Le procédé selon la Revendication 1 ou 2, où l'estimation d'un débit de données sortant de la station de base (130) vers la pluralité d'UE (110) comprend l'estimation du débit de données sortant en réponse à des accusés de réception reçus des UE.

4. Le procédé selon l'une quelconque des Revendications précédentes, où les un ou plusieurs seuils comprennent différents seuils pour différents UE (110).

5. Le procédé selon l'une quelconque des Revendications précédentes, où les un ou plusieurs seuils varient au fil du temps.

6. Le procédé selon l'une quelconque des Revendications précédentes, où l'estimation du débit de données sortant de la station de base (130) comprend l'estimation d'une différence entre deux temps notés pour deux paquets d'accusé de réception différents divisée par une différence entre des numéros de séquence notés des deux paquets.

7. Le procédé selon l'une quelconque des Revendications 1 à 5, où l'estimation du débit de données sortant de la station de base comprend l'estimation d'un taux de paquets de données interceptés sur leur chemin vers la station de base, destinés à un ou plusieurs UE particuliers (110), lorsqu'une fonction d'un temps de parcours aller-retour vers l'UE est stable.

8. Le procédé selon l'une quelconque des Revendications précédentes, où au moins une desdites au moins une action est exécutée afin de réduire le degré de remplissage d'au moins une file d'attente dans la station de base (130).

9. Un appareil superviseur informatique (170) destiné à la supervision de données dans un réseau sans fil, comprenant :
un dispositif de notation (274) configuré de façon à intercepter des paquets de données en chemin entre un réseau de données en mode paquets et une station de base (130), à noter des temps associés aux paquets de données interceptés et à identifier, dans les paquets interceptés, une ou plusieurs caractéristiques d'un flux correspondant du paquet,
un dispositif d'évaluation (276) configuré, au moins partiellement en fonction d'un ou de plusieurs éléments parmi lesdits temps notés et les une ou plusieurs caractéristiques identifiées, de façon à évaluer le service fourni par la station de base (130), et configuré, au moins partiellement en fonction d'un résultat de ladite évaluation, de façon à déterminer si ou non au moins une action destinée à améliorer une qualité d'une expérience utilisateur fournie par la station de base (130) devrait être exécutée, et
un retardateur d'exécutant d'action (278) configuré, s'il est déterminé qu'une action quelconque devrait être exécutée, de façon à exécuter au moins une action destinée à améliorer une qualité d'une expérience utilisateur fournie par la station de base (130),
**caractérisé en ce que** :
le dispositif d'évaluation (276) est configuré de façon à évaluer le service fourni par la station de base (130) par l'approximation d'un débit de données entrant vers la station de base (130) pour des paquets dirigés vers une pluralité d'équipements d'utilisateur, UE (110), en fonction des temps notés associés aux paquets de données interceptés,
l'estimation d'un débit de données sortant de la station de base (130) vers la pluralité d'UE (110), en fonction des paquets interceptés, l'estimation, pour chacun des UE (110), d'au moins un paramètre indicatif d'un degré de remplissage d'au moins une file d'attente dans la station de base (130) pour des paquets dirigés vers l'UE (110), en fonction des débits de données entrants estimés et des débits de données sortants, et la comparaison du au moins un paramètre estimé indicatif du degré de remplissage à un ou plusieurs seuils.

10. Le système selon la Revendication 9, où le dispositif d'évaluation (276) estime le débit de données sortant de la station de base (130) vers la pluralité d'UE (110) en réponse à des accusés de réception reçus des UE.

11. Le système selon la Revendication 9 ou 10, où le dispositif d'évaluation (276) estime le débit de données sortant de la station de base (130) sous la forme d'une différence entre deux temps notés pour deux paquets d'accusé de réception différents, divisée par une différence entre des numéros de séquence notés des deux paquets.

12. Le système selon l'une quelconque des Revendications 9 à 11, où le dispositif d'évaluation (276) ajuste le au moins un paramètre en réponse à un paramètre d'ajustement estimant un temps minimum entre le moment où un paquet de données donné circulant vers l'UE est intercepté et le moment où un accusé de réception correspondant est intercepté.

13. Le système selon l'une quelconque des Revendications 9 à 12, où au moins une desdites au moins une action est exécutée afin de réduire le degré de remplissage d'au moins une file d'attente dans la station de base.

14. Un produit de programme informatique comprenant un support utilisable par ordinateur possédant du code lisible par ordinateur incorporé sur celui-ci destiné à la supervision de données dans un réseau sans fil, le produit de programme informatique comprenant :
du code de programme lisible par ordinateur destiné à amener un ordinateur à intercepter des paquets de données en chemin entre un réseau de données en mode paquets et une station de base (130), à noter des temps associés aux paquets de données interceptés et à identifier, dans les paquets interceptés, une ou plusieurs caractéristiques d'un flux correspondant du paquet,
du code de programme lisible par ordinateur destiné à amener un ordinateur, au moins partiellement en fonction d'un ou de plusieurs desdits temps notés et des une ou plusieurs caractéristiques identifiées, à évaluer le service fourni par la station de base (130),
du code de programme lisible par ordinateur destiné à amener un ordinateur, au moins partiellement en fonction d'un résultat de ladite évaluation, à déterminer si ou non au moins une action destinée à améliorer une qualité d'une expérience utilisateur fournie par la station de base (130) devrait être exécutée, et
du code de programme lisible par ordinateur destiné à amener un ordinateur, s'il est déterminé qu'une action quelconque devrait être exécutée, à exécuter au moins une action destinée à améliorer une qualité d'une expérience utilisateur fournie par la station de base (130),
**caractérisé en ce que** :
l'évaluation comprend l'approximation d'un débit de données entrant vers la station de base (130) pour des paquets dirigés vers une pluralité d'équipements d'utilisateur, UE (110), en fonction des temps notés associés aux paquets de données interceptés,
l'estimation d'un débit de données sortant de la station de base (130) vers la pluralité d'UE (110), en fonction des paquets interceptés, l'estimation, pour chacun des UE (110), d'au moins un paramètre indicatif d'un degré de remplissage d'au moins une file d'attente dans la station de base (130) pour des paquets dirigés vers l'UE (110), en fonction des débits de données entrants estimés et des débits de données sortants, et la comparaison du au moins un paramètre estimé indicatif du degré de remplissage à un ou plusieurs seuils.

15. Le produit de programme informatique selon la Revendication 14, où au moins une desdites au moins une action est exécutée afin de réduire le degré de remplissage d'au moins une file d'attente dans la station de base (130).
